# EUROPÄISCHE PATENTSCHRIFT

(11) **EP 3 020 972 B1**
(45) Veröffentlichungstag und Bekanntmachung des Hinweises auf die Patenterteilung: **25.07.2018**
(21) Anmeldenummer: 15193507.9
(22) Anmeldetag: 06.11.2015
(51) Int. Cl.: F04B 41/06, F04B 49/00, B01D 53/26, F04B 39/16

(54) **ZWISCHENKÜHLERBYPASS**
INTERCOOLER BYPASS
DERIVATION DE DISPOSITIF DE REFROIDISSEMENT AUXILIAIRE

(30) Priorität: 14.11.2014 DE 102014116672
(43) Veröffentlichungstag der Anmeldung: 18.05.2016
(73) Patentinhaber: Kaeser Kompressoren SE, 96450 Coburg (DE)
(72) Erfinder: Simross, Dirk, 97633 Höchheim (DE); Fredenhagen, Andreas, 96450 Coburg (DE)
(74) Vertreter: Zech, Stefan Markus

(56) Entgegenhaltungen:
- EP-A1- 1 701 037
- EP-A2- 2 569 585
- WO-A1-2009/043123
- DE-A1- 10 117 790
- JP-A- H05 106 560
- JP-A- S56 152 726
- US-A1- 2003 188 542

## Beschreibung

Die Erfindung betrifft eine Kompressoranlage zur Komprimierung von Gasen in einer mehrstufigen Verdichtung nach dem Oberbegriff des Patentanspruchs 1 sowie ein Verfahren zum Betreiben einer Kompressoranlage nach den Merkmalen des Anspruchs 12.

Eine vorbekannte Kompressoranlage zur Erzielung einer mehrstufigen Verdichtung umfasst mehrere in Serie geschaltete Kompressoren, nämlich einen vorgelagerten Kompressor und einen letzten Kompressor, der innerhalb der mehrstufigen Verdichtung die höchste Verdichterstufe definiert, einen oder mehrere Zwischenkühler zwischen vorgelagertem Kompressor und letztem Kompressor und einen dem letzten Kompressor nachgeschalteten Adsorptionstrockner, der als Rotationstrockner ausgebildet ist und einen Regenerationssektor sowie einen Trocknungssektor umfasst, wobei der Regenerationssektor am letzten Kompressor in einer solchen Weise angeschlossen ist, dass der vom letzten Kompressor ausgegebene Gasstrom komplett im Vollstromprinzip durch den Regenerationssektor des Adsorptionstrockners geführt ist.

Derartige mehrstufige Kompressoranlagen bzw. mehrstufige Verdichterverfahren, bei dem bzw. bei denen an den letzten Kompressor, der innerhalb der mehrstufigen Verdichtung die höchste Verdichterstufe definiert, ein Adsorptionstrockner, der als Rotationstrockner ausgebildet ist und einen Regenerationssektor sowie einen Trocknungssektor umfasst, wobei der Regenerationssektor am letzten Kompressor in einer solchen Weise angeschlossen ist, dass der vom letzten Kompressor ausgegebene Gasstrom komplett im Vollstromprinzip durch den Regenerationssektor des Adsorptionstrockners geführt ist, sind an sich bekannt.

Ein Problem besteht allerdings darin, dass am Ausgang des Trocknungssektors ein verdichteter und getrockneter Gasstrom bereitstehen soll, der in Bezug auf einen festgelegten Grenzwert hinreichend trocken sein muss. Als Maß für die Trockenheit des getrockneten Gases und insofern für das Trocknungsergebnis des Trocknungsprozesses wird allgemein der Drucktaupunkt verwendet. Der Drucktaupunkt gibt die Temperatur an, auf die ein komprimierter Gasstrom maximal abgekühlt werden kann, ohne dass darin enthaltener Wasserdampf als Kondensat oder Eis ausfällt. Beim hier vorliegenden Trocknungsprozess wird der aus dem letzten Verdichter austretende Gasstrom komplett durch den Regenerationssektor des als Rotationstrockner ausgebildeten Adsorptionstrockners geführt, so dass die ohnehin anfallende Verdichtungswärme in effizienter Weise zur Desorption des zuvor im Adsorptionsmaterial des Rotationstrockners adsorbierten Wassers eingesetzt werden kann. Das insofern möglichst weitgehend im Regenerationssektor regenerierte Adsorptionsmaterial wird nach der Regeneration erneut im Trocknungssektor für die Gastrocknung eingesetzt.

Um eine ausreichende Trocknung, also die Einhaltung eines festgelegten Grenzwertes für den Drucktaupunkt sicherstellen zu können, muss der Regenerationssektor vom letzten Kompressor mit verdichtetem Gas ausreichend hoher Temperatur beaufschlagt werden. Die Temperatur, mit der das verdichtete Gas aus dem letzten Kompressor austritt und in den Regenerationssektor eintritt, wird nachstehend als Regenerationseintrittstemperatur T_{Ri} bezeichnet und muss, wie erwähnt, ausreichend hoch sein. Für die Zwecke der folgenden Anmeldung wird die Austrittstemperatur aus dem letzten Kompressor T_{Al} als mit der Regenerationseintrittstemperatur T_{Ri} gleich angenommen (T_{Al} = T_{Ri}). Selbst wenn sich das verdichtete Gas zwischen dem Ausgang des letzten Kompressors und dem Eingang in den Regenerationssektor geringfügig abkühlen sollte, so kann dies in den meisten praktischen Anordnungen vernachlässigt werden. In jedem Fall ist aber festzuhalten, dass die Regenerationseintrittstemperatur T_{Ri} mit der Austrittstemperatur aus dem letzten Kompressor T_{Al} unmittelbar korreliert.

Wird die Regenerationseintrittstemperatur T_{Ri} zu hoch, kann dies mit verschiedenen Nachteilen verbunden sein. Zum einen besteht die Gefahr, dass nachfolgende Komponenten in einem angeschlossenen Druckluftsystem mit zu hohen Temperaturen beaufschlagt werden, für die diese nicht ausgelegt sind, also die zulässigen Betriebstemperaturen nachgelagerter Komponenten überschritten wird.

Zum anderen korreliert eine zu hohe Regenerationseintrittstemperatur T_{Ri} auch mit einer entsprechend höheren Eintrittstemperatur des Gases in den letzten Kompressor. Die Komprimierung eines heißeren Gases ist jedoch deutlich ineffizienter als die Komprimierung eines vergleichsweise kühleren Gases mit der Folge, dass der Verdichtungsprozess ineffizient wird.

Da sich Randbedingungen, wie beispielsweise die Temperatur von Kühlmedien, die zur Kühlung des oder der Zwischenkühler zur Verfügung stehen, oder auch die Drehzahl und damit die Leistung eines oder mehrerer Kompressoren unter bestimmten Betriebsbedingungen ändern können, kann damit zunächst auch die Regenerationseintrittstemperatur T_{Ri} sich in ihrem Wert verändern.

Insofern ist im Stand der Technik bereits vorgeschlagen worden, zur Einhaltung eines vorgegebenen Trocknungsgrades eines verdichteten Gases die Regenerationseintrittstemperatur T_{Ri} auf einen festgelegten Wert zu regeln. Eine derartige Lösung ist etwa in JPS 56152726 beschrieben. Konkret wird dort eine zweistufige Verdichtung umfassend einen vorgelagerten Kompressor und einen letzten Kompressor vorgeschlagen, wobei zwischen dem vorgelagerten Kompressor und dem letzten Kompressor ein Zwischenkühler vorgesehen ist. Der dort vorgesehene Zwischenkühler wird mit einem geregelten Kühlwasserstrom dergestalt beaufschlagt, dass die Austrittstemperatur des verdichteten Gases aus dem letzten Kompressor und damit die Regenerationseintrittstemperatur T_{Ri} stets über einer eingestellten Mindesttemperatur gehalten wird. Im Stand der Technik wird eine Trocknung durch einen phasenweise zu regenerierenden Schalttrockner bewirkt. Durch die Regelung des den Zwischenkühler beaufschlagenden Kühlwasserstroms wird die Regeneration des dort als Schalttrockner ausgebildeten Adsorptionstrockners immer mit mindestens der festgelegten Mindesttemperatur durchgeführt.

Ausgehend von diesem Stand der Technik besteht die Aufgabe der vorliegenden Erfindung darin, eine Kompressoranlage bzw. ein Verfahren zum Betreiben einer Kompressoranlage vorzuschlagen, bei der bzw. bei dem in einer mehrstufigen Verdichtung mit anschließender Adsorptionstrocknung des verdichteten Gases die Gesamtenergieeffizienz verbessert ist.

Diese Aufgabe wird in vorrichtungstechnischer Hinsicht durch die Merkmale des Anspruchs 1 und in verfahrenstechnischer Hinsicht durch die Merkmale des Anspruchs 12 gelöst.

Konkret wird eine Kompressoranlage zur Komprimierung von Gasen in einer mehrstufigen Verdichtung vorgeschlagen, umfassend mehrere in Serie geschaltete Kompressoren, umfassend mindestens einen, in Strömungsrichtung vorletzten Kompressor und einen letzten Kompressor, der innerhalb der mehrstufigen Verdichtung die höchste Verdichterstufe definiert, einen oder mehrere Zwischenkühler zwischen vorletztem Kompressor und letztem Kompressor und einen dem letzten Kompressor nachgeschalteten Adsorptionstrockner, der als Rotationstrockner mit einer rotierenden Adsorptionskammer ausgebildet ist und innerhalb der Adsorptionskammer einen Regenerationssektor sowie einen Trocknungssektor umfasst, wobei der Regenerationssektor am letzten Kompressor in einer solchen Weise angeschlossen ist, dass der vom letzten Kompressor ausgegebene verdichtete Gasstrom im Vollstromprinzip durch den Regenerationssektor des Adsorptionstrockners geführt ist, wobei zwischen vorletztem Kompressor und letztem Kompressor weiterhin eine den oder mindestens einen Zwischenkühler überbrückende Bypassleitung angeordnet ist, in der ein Einstellorgan vorgesehen ist, um den über die Bypassleitung geführten Gasstrom und damit die Regenerationseintrittstemperatur T_{Ri} des verdichteten Gases in den Regenerationssektor bedarfsgerecht einstellen zu können.

Es kann also beispielsweise vorgesehen sein, dass wenn zwischen vorletztem Kompressor und letztem Kompressor genau ein Zwischenkühler vorgesehen ist, die Bypassleitung diesen einen Zwischenkühler überbrückt. Sofern zwischen vorletztem Kompressor und letztem Kompressor mehrere Zwischenkühler vorgesehen sind, so kann vorgesehen sein, dass die Bypassleitung alle, einen oder mehrere Zwischenkühler überbrückt, bevorzugt jedenfalls den in Strömungsrichtung letzten Zwischenkühler vor dem letzten Kompressor. Schließlich ist es auch denkbar, dass der Zwischenkühler oder bei mehreren Zwischenkühlern ein Zwischenkühler, insbesondere der letzte Zwischenkühler vor dem letzten Kompressor nur teilweise überbrückt wird, was beispielsweise dadurch realisiert sein könnte, dass bei Ausbildung des Zwischenkühlers in Form eines Rohrbündelwärmetauschers ein dritter Abgang in einem Mantel des Rohrbündelwärmetauschers vorgesehen wird.

Das in der Bypassleitung vorgesehene Einstellorgan kann auch in Gestalt eines Mischventils ausgebildet sein, das dort, wo die Bypassleitung beginnt bzw. dort wo die Bypassleitung endet, zur Einstellung ausgebildet ist, festzulegen, welcher Teilstrom über den Zwischenkühler und welcher Teilstrom über die Bypassleitung geführt ist. In dieser Ausgestaltung ist es auch möglich, den über den Zwischenkühler geführten Teilstrom komplett abzusperren.

Ein Rotationstrockner im Sinne der Erfindung ist hierbei ein Adsorptionstrockner, umfassend eine trommelförmige Adsorptionskammer mit einer Vielzahl von Adsorptionskanälen, die ein Adsorptionsmaterial enthalten, wobei an einem ersten Ende der Adsorptionskammer eine erste Zuleitung sowie eine erste Ableitung angeordnet ist und an einem zweiten Ende der Adsorptionskammer eine zweite Zuleitung sowie eine zweite Ableitung angeordnet ist, wobei die trommelförmige Adsorptionskammer gegenüber den Zu- und Ableitungen rotierbar ist, so dass die Adsorptionskanäle in zeitlichem Wechsel mit der ersten Zuleitung und der zweiten Ableitung oder der ersten Ableitung und der zweiten Zuleitung fluidtechnisch verbindbar sind. Sofern vorliegend von einer rotierenden Adsorptionskammer die Rede ist, so wird klargestellt, dass es auf die Relativbewegung zwischen Adsorptionsmaterial und Trocknungs- bzw. Regenerationssektor ankommt, die entweder dadurch bewerkstelligt wird, dass die Adsorptionskammer rotiert und die Zu- und Ableitungen feststehen oder dass die Adsorptionskammer feststeht und die Zu- und Ableitungen rotieren.

Es werden dabei der bereits erwähnte Trocknungssektor sowie der bereits erwähnte Regenerationssektor definiert, wobei im Trocknungssektor das Gas getrocknet wird, und im Regenerationssektor das Adsorptionsmaterial regeneriert wird, wobei die erste Zuleitung derart ausgebildet ist, dass der zu trocknende Gasstrom als Vollstrom dem Regenerationssektor zuführbar ist, wobei die zweite Ableitung mit der zweiten Zuleitung verbunden ist und somit eine Verbindungsleitung ausbildet und wobei Regenerationssektor und Trocknungssektor zur seriellen Durchströmung hintereinander angeschlossen sind, derart dass der dem Trocknungssektor zugeführte Gasstrom im Wesentlichen vollständig dem aus dem Regenerationssektor, ggf. einschließlich eines aus einem ggf. noch vorhandenen Kühlsektor abgeführten Gasstrom entspricht.

Unter Vollstrom soll in der vorliegenden Beschreibung insbesondere ein Anteil des Gasstromes von mindestens 95 %, vorzugsweise mindestens 99 %, weiter vorzugsweise (im Wesentlichen) 100 % verstanden werden.

Sofern in der vorliegenden Anmeldung von Zwischenkühlern die Rede ist, so wird klargestellt, dass diese fluidtechnisch mit dem vorletzten Kompressor und dem letzten Kompressor verbunden sind und dazu ausgebildet und eingerichtet sind, den teilverdichteten Gasstrom, insbesondere über ein Kühlmedium, zu kühlen. Der Zwischenkühler ist insgesamt als funktionelle Einheit zu verstehen, der verfahrenstechnisch dem Prozessschritt einer Zwischenkühlung bewirkt. Baulich kann insofern der Zwischenkühler auch mit einem Kondensatabscheider, auf den weiter unten noch näher eingegangen wird, in einer gemeinsamen Baueinheit integriert ausgebildet sein.

In verfahrenstechnischer Hinsicht wird ein Verfahren zum Betreiben einer Kompressoranlage zur Erzielung einer mehrstufigen Verdichtung vorgeschlagen, umfassend mehrere in Serie geschaltete Kompressoren, hierunter einen in Strömungsrichtung vorletzten Kompressor und einen letzten Kompressor, der innerhalb der mehrstufigen Verdichtung die höchste Verdichterstufe definiert sowie einen dem letzten Kompressor nachgeschalteten Adsorptionstrockner, der als Rotationstrockner ausgebildet ist und einen Regenerationssektor sowie einen Trocknungssektor umfasst, wobei der vom letzten Kompressor ausgegebene Gasstrom im Vollstromprinzip durch den Regenerationssektor des Adsorptionstrockners geführt wird, wobei sich das Verfahren weiterhin dadurch auszeichnet, dass über die Einstellung eines Öffnungsgrades einer Bypassleitung, die einen oder mehrere zwischen vorletztem Kompressor und letztem Kompressor vorgesehene Zwischenkühler ganz oder teilweise überbrückt, die Regenerationseintrittstemperatur T_{Ri} des verdichteten Gases in den Regenerationssektor bedarfsgerecht eingestellt wird.

Wenn also ein oder mehrere zwischen vorletztem Kompressor und letztem Kompressor vorgesehene Zwischenkühler ganz oder teilweise überbrückt werden, so bedeutet dies, dass einerseits im Fall von mehreren Zwischenkühlern nicht alle Zwischenkühler überbrückt sein müssen, sondern dass auch nur einige oder auch nur ein einziger Zwischenkühler, insbesondere ein in Strömungsrichtung letzter Zwischenkühler vor dem letzten Kompressor überbrückt sein kann. Es ist darüber hinaus andererseits aber auch möglich, dass, wenn ein oder mehrere Zwischenkühler vorgesehen sind, ein einzelner Zwischenkühler aber auch nur teilweise überbrückt ist.

Sofern vorstehend von einem Öffnungsgrad der Bypassleitung die Rede ist, so kann der Öffnungsgrad der Bypassleitung auch über ein Mischventil eingestellt werden, das dort wo die Bypassleitung beginnt bzw. dort wo die Bypassleitung endet, einstellt bzw. festlegt, welcher Teilstrom über die Bypassleitung und welcher Teilstrom über den Zwischenkühler geführt wird. In dieser Ausgestaltung ist es auch möglich, den über den Zwischenkühler geführten Teilstrom komplett abzusperren.

Sofern bei der vorliegenden Anmeldung davon die Rede ist, dass der Adsorptionstrockner dem letzten Kompressor nachgeschaltet ist, so ist ein möglichst unmittelbarer Anschluss angestrebt, auch um die Wärme des aus dem letzten Kompressor ausströmenden verdichteten Gasstroms möglichst ohne größere Wärmeverluste unmittelbar für die Regeneration einsetzen zu können. Die Zwischenschaltung von Komponenten wie eines Pulsationsdämpfers, von Sensoren, Ventilen oder anderer derartiger, die Temperatur des verdichteten Gases nicht maßgeblich beeinflussende Komponenten, kann aber dennoch, soweit notwendig bzw. sinnvoll vorgesehen sein.

Ein Kerngedanke der vorliegenden Erfindung beruht auf der Überlegung, dass ein festgelegter Trocknungsgrad des verdichteten Gases zwar mit einer relativ hohen festgelegten Regenerationseintrittstemperatur T_{Ri} sichergestellt werden kann, eine hohe Regenerationseintrittstemperatur T_{Ri} aber aus energetischen Gründen nachteilig sein kann. In Situationen beispielsweise, in denen das angesaugte zu verdichtende Gas relativ trocken ist, kann auch mit einer niedrigeren Regenerationseintrittstemperatur T_{Ri} der festgelegte Trocknungsgrad eingehalten werden. Gleichzeitig kann dann aber die Regenerationseintrittstemperatur T_{Ri} niedriger gefahren werden, so dass die Regenerationseintrittstemperatur T_{Ri} erfindungsgemäß variabel, und zwar bedarfsgerecht, eingestellt wird.

Unter bedarfsgerechter Einstellung wird also die situationsbedingte Festlegung für den Wert T_{Ri} je nach Anforderung an den bereitzustellenden Gasstrom oder Optimierungsgesichtspunkt verstanden. Hohe Werte für T_{Ri} führen zu einer erhöhten Effizienz des Trocknungsprozesses, bedeuten aber auch eine ineffizientere Komprimierung des Gasstroms im letzten Kompressor und gehen mit einer niedrigeren Gesamteffizienz der Anlage einher. Die bedarfsgerechte Einstellung und damit die Festlegung des T_{Ri}-Wertes kann weiterhin von einer Reihe technischer und äußerer Faktoren abhängen, wie beispielsweise der Temperatur und Feuchtigkeit des eintretenden Gasstroms, den Betriebstemperaturgrenzen der verschiedenen Komponenten des Systems, der Drehzahl der Kompressoren, der Temperatur des Kühlmediums oder der Umgebungstemperatur der Anlage. Die bedarfsgerechte Einstellung und damit die Festlegung der Regenerationseintrittstemperatur T_{Ri} kann insofern aktuelle Zustandsbedingungen verschiedener Medien, wie die Temperatur des Kühlmediums, die Temperatur und/oder Feuchte des zu verdichtenden, teilverdichteten oder verdichteten Gases umfassen. Neben der Berücksichtigung der aktuell gegebenen Werte können alternativ oder zusätzlich auch Werte aus der Vergangenheit - beispielsweise bis zu 30 min. zurückliegend - bei der bedarfsgerechten Einstellung der Regenerationseintrittstemperatur T_{Ri} Berücksichtigung finden.

Das bedarfsgerechte Einstellen der Regenerationseintrittstemperatur T_{Ri}, die ja der Austrittstemperatur des letzten Kompressors T_{Al} entspricht bzw. wenigstens mit dieser korreliert, schließt insofern ein variables Einstellen der Austrittstemperatur T_{Al} des letzten Kompressors ein. Anders als im Stand der Technik wird nicht eine festgelegte Austrittstemperatur des letzten Kompressors T_{Al}, die der Eintrittstemperatur in den Regenerationssektor entspricht, fest vorgegeben, sondern die Austrittstemperatur des letzten Kompressors T_{Al} bzw. die Regenerationseintrittstemperatur in den Regenerationssektor T_{Ri} des Adsorptionstrockners wird erfindungsgemäß variabel gefahren.

Die variable Einstellung kann insofern unmittelbar oder mittelbar die Zustandsbedingungen des angesaugten Gases berücksichtigen. Es könnte etwa bei einem relativ feuchten Ansauggas, die Austrittstemperatur T_{Al} des letzten Kompressors bzw. die Regenerationseintrittstemperatur T_{Ri} in den Regenerationssektor angehoben oder bei relativ trockenem angesaugten Gas die Austrittstemperatur T_{Al} des letzten Kompressors bzw. die Regenerationseintrittstemperatur T_{Ri} heruntergefahren werden.

Dadurch, dass die Regenerationseintrittstemperatur T_{Ri} bedarfsgerecht eingestellt wird, kann im Bedarfsfall mit einer niedrigeren Regenerationseintrittstemperatur T_{Ri} gefahren werden und der festgelegte Trocknungsgrad dennoch eingehalten werden, als wenn die Regenerationseintrittstemperatur T_{Ri} konstant auf einen solchen Wert (so hohen Wert) festgelegt wird, dass der festgelegte Trocknungsgrad in allen denkbaren Fällen eingehalten wird.
Muss anders herum aber die Regenerationseintrittstemperatur T_{Ri} in bestimmten Fällen, in denen beispielsweise die Feuchte des angesaugten Gases sehr hoch ist, erhöht werden, so könnte dies grundsätzlich auch mit einer zuschaltbaren Heizeinrichtung erfolgen, die das verdichtete Gas vor Eintritt in den Regenerationssektor aufheizt. In der Tat ist eine derartige Lösung bereits in der WO 2009 043 123 A1 beschrieben. Gegenüber einer eigens vorgesehenen Zusatzheizeinrichtung ist aber die hier vorgeschlagene Vorgehensweise, nämlich einen Teil des vorverdichteten Gases vor dem letzten Kompressor am Zwischenkühler vorbei über eine Bypassleitung zu führen und damit letztendlich vorverdichtetes Gas höherer Temperatur bereits dem letzten Kompressor zuzuführen, deutlich effizienter, und zwar sowohl aus energetischen Überlegungen als auch aus baulichen Überlegungen. In baulicher Hinsicht ist eine eigens vorzusehende Heizeinrichtung nicht notwendig. Aus energetischen Überlegungen dürfte die zusätzlich aufzubringende Energie zur Erhöhung der Regenerationseintrittstemperatur bei der Lösung über eine Heizeinrichtung in etwa zwei- bis viermal so hoch sein, wie der zusätzliche Energieaufwand zur Komprimierung des in seiner Temperatur erhöhten Gases im letzten Kompressor bzw. vor allem im vorletzten Kompressor. Durch Öffnen eines Querschnittes in der Bypassleitung steigt die Temperatur des teilverdichteten Gases zwischen dem Vereinigungspunkt und dem letzten Kompressor. Durch diese höhere Temperatur steigt der Druck zwischen dem vorletzten Kompressor und letzten Kompressor, der auch als Zwischendruck zwischen vorletztem Kompressor und letztem Kompressor bezeichnet werden kann. Damit steigt aber auch das Druckverhältnis für den vorletzten Kompressor an, d.h. der vorletzte Kompressor muss das Gas auf den nunmehr höheren Zwischendruck verdichten, so dass der Energieaufwand für den vorletzten Kompressor ansteigt.
Das Prinzip der Einwirkung auf die Regenerationseintrittstemperatur T_{Ri} durch ein in einer Bypassleitung vorgesehenes Einstellorgan ist bereits aus der JP 5106560 bekannt. Dort wird allerdings nur ein Teil des heißen komprimierten Gases zum Regenerieren des Adsorptionsmaterials eingesetzt. Durch die Bypassleitung wird aber die Temperatur des gesamten verdichteten heißen Gases angehoben und damit auch die für die Verdichtung des gesamten Gasstroms die Leistungsaufnahme der Kompressoranlage erhöht. Die durch die erhöhte Leistungsaufnahme des letzten Kompressors erkaufte Temperaturerhöhung wird aber für einen Teil des verdichteten Gases nicht genutzt, sondern dieser Teil ohne Nutzung der Wärme durch einen Kühler geführt. Dadurch ist dieses Verfahren relativ ineffizient. Darüber hinaus wird bei keiner der o.g. Schriften eine bedarfsabhängige Steuerung der Regenerationseintrittstemperatur T_{Ri} vorgenommen. Dies führt zu einer unnötig hohen Leistungsaufnahme der Kompressoranlage. Es wird häufig mit einem Drucktaupunkt gefahren, der deutlich niedriger als notwendig liegt. Auch hierdurch ist das Verfahren relativ ineffizient.

Schließlich ist im genannten Stand der Technik ein Schalttrockner vorgesehen. Durch das große Zeitintervall zwischen dem Regenerieren eines Behälters und Trocknen von verdichtetem Gas mit diesem Behälter würde es eine unakzeptabel lange Reaktionszeit erfordern, um bei zu hoher Feuchte des verdichteten Gases auf die Regenerationstemperatur einzuwirken. Insofern lässt sich mit der dort vorgeschlagenen Anlage eine bedarfsabhängige Steuerung der Regenerationseintrittstemperatur schon konstruktiv faktisch nicht verwirklichen.

In einer bevorzugten Ausgestaltung der vorliegenden Erfindung ist die Kompressoranlage zur Erzielung einer zweistufigen Verdichtung ausgebildet, so dass der in Strömungsrichtung vorgelagerte Kompressor die niedrigste Verdichterstufe definiert. Obwohl eine zweistufige Verdichtung einen häufigen Anwendungsfall darstellt, sei an dieser Stelle darauf hingewiesen, dass die Erfindung selbstverständlich nicht auf die Anwendung in einer zweistufigen Verdichtung beschränkt ist, sondern die Kompressoranlage zur Erzielung einer drei-, vier-, fünf- oder höherstufigen Verdichtung ausgebildet sein kann. Auch das Verfahren kann auf eine drei-, vier-, fünf- oder höherstufige Verdichtung angewandt werden. Bei einer vierstufigen Verdichtung beispielsweise handelt es sich in Strömungsrichtung betrachtet bei dem dritten Kompressor um den vorletzten Kompressor und beim letzten Kompressor um den vierten Kompressor im Sinne der vorliegenden Erfindung. Bei einer fünfstufigen Verdichtung handelt es sich in Strömungsrichtung betrachtet beim vorletzten Kompressor um den vierten Kompressor und beim letzten Kompressor um den fünften Kompressor. Klarstellend wird erwähnt, dass der letzte Kompressor in Strömungsrichtung betrachtet den letzten Kompressor der mehrstufigen Verdichtung vor Übergabe des Gasstroms an den Adsorptionstrockner, also vor dem Eintritt in den Regenerationssektor bezeichnet.

In einer weiter bevorzugten Ausgestaltung ist das Einstellorgan zu einer kontinuierlichen bzw. stetigen Einstellung des Gasstroms ausgebildet. Weiterhin kann das Einstellorgan auch bedarfsweise die Bypassleitung komplett absperren und/oder einen dem Einstellorgan zugeleiteten Leitungsquerschnitt des Bypasses komplett öffnen. In allen vorgenannten Ausgestaltungen ist es denkbar, eine Einstellung in diskreten Schritten oder kontinuierlich bzw. stetig zuzulassen. Eine Freigabe des Querschnitts in diskreten Schritten für den Durchfluss durch die Bypassleitung könnte auch durch Parallelschalten mehrerer Absperrklappen erreicht werden. Das Einstellorgan könnte auch direkt an der Verzweigungsstelle 24 oder am Vereinigungspunkt 21 der Bypassleitung 14 in Form eines Verteilungs- oder Mischventils installiert werden. In einer konkret möglichen Ausgestaltung kann es sich bei dem Einstellorgan um ein Proportionalventil handeln.

In einer besonders bevorzugten Ausgestaltung ist das Einstellorgan mit einem Aktuator gekoppelt, der zur elektrischen, pneumatischen oder hydraulischen Betätigung des Einstellorgans ausgebildet ist.

In einer konkret denkbaren Ausgestaltung ist der Aktuator beispielsweise motorisch angetrieben.

In einer weiteren, bevorzugten Ausgestaltung ist ein bereits erwähnter Kondensatabscheider vorgesehen, der stromabwärts des oder der Zwischenkühler stromaufwärts eines Vereinigungspunkts angeordnet ist, an dem der über die Bypassleitung geführte Gasstrom mit dem über den oder die Zwischenkühler geführten Gasstrom vor Eintritt in den letzten Kompressor vereinigt wird. Der Kondensatabscheider kann auch mit dem Zwischenkühler in einer gemeinsamen Baueinheit integriert ausgebildet sein. Obwohl auch Ausgestaltungen denkbar sind, in denen Zwischenkühler zwischen einem vorgelagerten und einem nachgelagerten Kompressor bzw. einem vorletzten Kompressor und einem letzten Kompressor lediglich eine Abkühlung des komprimierten und dem nachgelagerten bzw. letzten Kompressor zugeführten verdichteten Gases bewirken, erscheint das Vorsehen eines Kondensatabscheiders gerade dann sinnvoll, wenn das verdichtete Gas soweit heruntergekühlt wird, dass die in ihr enthaltene Feuchtigkeit bzw. Wasserdampf teilweise auskondensiert und abgeschieden werden kann. Hierdurch wird es möglich, ein Teil des in dem durch den vorletzten Kompressor angesaugten Gas befindlichen Wassers aus dem Gasstrom zu entfernen, bevor dieser Gasstrom zur Regeneration des Adsorptionsmaterials verwendet wird. Dadurch kann ein besseres Trocknungsergebnis erzielt werden, bzw. es kann das gewünschte Trocknungsergebnis mit einer niedrigeren Regenerationseintrittstemperatur T_{Ri} und dadurch niedrigerer Leistungsaufnahme, insbesondere des letzten Kompressors, erreicht werden. Klarstellend wird ergänzt, dass der Kondensatabscheider in einer Verbindungsleitung zwischen Zwischenkühler und Vereinigungspunkt angeordnet ist, also vom Gasstrom, der auch über den Zwischenkühler geführt ist, durchströmt wird.

In einer besonders bevorzugten Ausgestaltung ist weiterhin eine Steuerungseinrichtung vorgesehen, die mit dem Einstellorgan bzw. einem dem Einstellorgan zugeordneten Aktuator in Wirkverbindung steht, um bedarfsweise, insbesondere in Abhängigkeit der aktuellen Zustandsdaten des zu verdichtenden Gases oder des verdichteten Gases, wie etwa der Feuchte des angesaugten Gases und/oder der Feuchte des aus dem Trocknungssektor ausgegebenen verdichteten Gases, auf das Einstellorgan einzuwirken. Die Steuerungseinrichtung kann also ein Steuersignal an das Einstellorgan bzw. dem mit dem Einstellorgan in Wirkverbindung stehenden Aktuator ausgeben, um das Einstellorgan in eine bestimmte, gewünschte Position zu bringen.

In einer weiteren bevorzugten Ausgestaltung kann die Steuerungseinrichtung auch ein oder mehrere Signaleingänge umfassen, insbesondere einen Signaleingang für eine Austrittstemperatur am oder stromabwärts des letzten Kompressors, einen Signaleingang für mindestens ein den Trocknungsprozess charakterisierendes Signal, wie die Eintrittstemperatur in den Trocknungssektor, den Drucktaupunkt des aus dem Trocknungssektor ausgegebenen verdichteten Gases und/oder für eine Kühlmediumtemperatur, einen Signaleingang für mindestens ein den Verdichtungsprozess des letzten Kompressors charakterisierendes Signal, wie eine Gaseintrittstemperatur an diesem Kompressor, einen Gasaustrittsdruck dieses Kompressors, einen Gaseintrittsdrucks dieses Kompressors, eine Betriebstemperatur dieses Kompressors oder nachgeschalteter Komponenten und/oder einen Signaleingang für mindestens ein den Verdichtungsprozess des vorletzten Kompressors charakterisierendes Signal, wie eine Gasaustrittstemperatur dieses vorletzten Kompressors oder ein Gasaustrittsdruck dieses vorletzten Kompressors, einen Signaleingang für die Drehzahl eines oder mehrerer Kompressoren, und/oder einen Signaleingang für die Drehzahl der Adsorptionskammer. Als Signaleingang wird dabei ein Dateneingang bezeichnet, über den die Signaleinrichtung unmittelbare Messdaten (Rohdaten), aufbereitete Messdaten, digitalisierte Messdaten oder Daten, die den jeweiligen Messparametern entsprechen und direkt oder indirekt gewonnen werden, aufnehmen und/oder verarbeiten kann. In manchen Fällen kann es sich bei dem Signaleingang auch um einen "virtuellen" Signaleingang handeln, dergestalt, dass der Steuerungseinrichtung die hierauf bezogenen Daten unmittelbar oder mittelbar zur Verfügung stehen.

In einer möglichen Ausgestaltung kann die Kompressoranlage einen Drucktaupunktsensor umfassen, der zur Erfassung des Drucktaupunkts des am Trocknungssektor ausgegebenen verdichteten Gases ausgebildet ist und mit der Steuerungseinrichtung in Wirkverbindung steht, derart, dass das Einstellorgan über die Steuerungseinrichtung in Abhängigkeit des Drucktaupunkts des am Trocknungssektor ausgegebenen verdichteten Gases eingestellt wird. Ein derartiger Aufbau erscheint besonders einfach und sinnvoll, da bei einer sich abzeichnenden Verschlechterung des Trocknungsgrades des am Trocknungssektor ausgegebenen verdichteten Gases reagiert und dergestalt auf das Einstellorgan eingewirkt werden kann, dass die Regenerationseintrittstemperatur erhöht wird. Die Regenerationseintrittstemperatur kann somit auf einen energetisch sinnvollen Wert anhand des Trocknungsgrades des ausgegebenen verdichteten Gases eingestellt werden.

Die Steuerungseinrichtung kann weiterhin derart ausgebildet sein, dass sie mit einem Datenspeicher für die Betriebsdaten des Adsorptionstrockners in Wirkverbindung steht. Dabei ist es unerheblich, ob der Datenspeicher für die Betriebsdaten des Adsorptionstrockners komplett oder teilweise am Adsorptionstrockner, an einem Steuergerät für den Adsorptionstrockner, in der vorliegenden Steuerungseinrichtung, in einer übergeordneten zentralen Steuerungseinrichtung oder in anderer geeigneter Weise ausgebildet ist.

In einer möglichen, fakultativen Ausgestaltung kann vorgesehen sein, dass die Steuerungseinrichtung auch mit den Kompressoren in Wirkverbindung steht und beispielsweise die Kompressoren ansteuert, insbesondere deren Drehzahl einstellt und/oder deren Betriebsdaten, insbesondere deren Drehzahl, erfasst.

In einer vorteilhaften Ausgestaltung sieht das erfindungsgemäße Verfahren vor, dass die Austrittstemperatur T_{Al} des letzten Kompressors bzw. die Regenerationseintrittstemperatur T_{Ri} in den Regenerationssektor dergestalt bzw. mit dem Ziel eingestellt wird, dass das aus dem Trocknungssektor austretende verdichtete Gas einen festgelegten Mindestgrenzwert für den Trocknungsgrad einhält bzw. der Drucktaupunkt des aus dem Trocknungssektor entnommenen verdichteten Gases einen festgelegten Grenzwert für den Drucktaupunkt nicht überschreitet. Mit der Festlegung eines Grenzwertes für den Drucktaupunkt kann es dennoch möglich sein, dass der tatsächliche Drucktaupunkt des aus dem Trocknungssektor austretenden Gases diesen Grenzwert in Einzelfällen kurzfristig, jedoch nicht dauerhaft, überschreitet.

In einer bevorzugten Weiterbildung kann der Grenzwert für den Drucktaupunkt anwenderseits auf einen konstanten Wert eingestellt bzw. festgelegt werden oder in Abhängigkeit der Applikation fallweise eingestellt werden.

Bevorzugtermaßen kann weiterhin die Einstellung der Austrittstemperatur T_{Al} bzw. der Eintrittstemperatur T_{Ri} in den Regenerationssektor so eingestellt werden, dass ein Trocknungsgrad des aus dem Trocknungssektor entnommenen verdichteten Gases nicht nur im Hinblick auf einen Mindesttrocknungsgrad eingehalten wird, sondern dass auch eine energetisch nachteilige Übertrocknung vermieden wird.

In einer weiterhin bevorzugten Ausgestaltung des erfindungsgemäßen Verfahrens ist vorgesehen, dass die bedarfsgerechte Einstellung der Regenerationseintrittstemperatur T_{Ri} in den Regenerationssektor in Abhängigkeit der konkreten Zustandsdaten des zu verdichtenden Gases oder des verdichteten Gases, wie etwa der Feuchte des angesaugten Gases und/oder der Feuchte des aus dem Trocknungssektor ausgegebenen verdichteten Gases während des Betriebs der Kompressoranlage kontinuierlich, quasi kontinuierlich oder in Intervallen erfolgt.

In einer weiteren fakultativen Ausgestaltung des erfindungsgemäßen Verfahrens kann vorgesehen sein, dass die bedarfsgerechte Einstellung der Eintrittstemperatur T_{Ri} in Abhängigkeit eines erfassten Drucktaupunkts des verdichteten Gases, das aus dem Trocknungssektor ausgegeben wird, erfolgt. Hierdurch wird eine besonders einfache und zuverlässige Regelmöglichkeit geschaffen.

Weiter kann das erfindungsgemäße Verfahren in einer bevorzugten Weiterbildung vorsehen, dass der Öffnungsgrad der Bypassleitung unter Beachtung maximal zulässiger Betriebstemperaturen der stromab der Bypassleitung von verdichtetem Gas durchströmten Komponenten, insbesondere des letzten Kompressors und/oder nachgeschalteter Komponenten begrenzt wird. Der über die Bypassleitung geführte Gasstrom ist insofern zu begrenzen, wenn ansonsten festgelegte Temperaturgrenzen an vorgegebenen Stellen stromaufwärts oder stromabwärts der Bypassleitung in der Kompressoranlage oder in einem stromabwärts angeordneten Gassystem überschritten würden. Eine unmittelbare Auswirkung ergibt sich auch stromaufwärts der Bypassleitung: eine höhere Eintrittstemperatur beim letzten Kompressor bewirkt einen höheren Druck zwischen dem letzten Kompressor und dem vorletzten Kompressor. Dadurch muss der vorletzte Kompressor aber auch einen höheren Druck verdichten und wegen des höheren Druckverhältnisses mehr Arbeit verrichten. Insofern steigt auch die Austrittstemperatur des vorletzten Kompressors an.

Die Begrenzung des Öffnungsgrades der Bypassleitung kann sich je nach den gegebenen konkreten äußeren Faktoren ändern und ist insofern als variabel anzusehen. Es ist möglich, den Öffnungsgrad als tatsächlichen Vorgabewert, beispielsweise in Prozent anzugeben, wobei auch in diesem Fall die Begrenzung des Öffnungsgrades nie stets beim selben Wert erfolgt, sondern von den Umgebungsbedingungen abhängig ist. Es ist aber auch möglich, dass der Öffnungsgrad nicht über einen festen Wert gesteuert bzw. geregelt wird, sondern dem Einstellorgan nur Steuerbefehle dergestalt übermittelt werden, vergrößere den Öffnungsgrad bzw. verkleinere den Öffnungsgrad. Hinsichtlich der Betriebstemperatur bzw. Betriebstemperaturen einer Komponente wird darauf hingewiesen, dass für eine einzelne Komponente eine Betriebstemperatur oder auch mehrere Betriebstemperaturen festgelegt sein können, beispielsweise für einen Kompressor, eine maximale Gaseintrittstemperatur als erster Wert einer maximal zulässigen Betriebstemperatur, eine maximal zulässige Gasaustrittstemperatur als zweiter Wert einer maximalen Betriebstemperatur und/oder beispielsweise ein maximaler Mittelwert aus einer Gaseintritts- und einer Gasaustrittstemperatur als dritter Wert einer maximalen Betriebstemperatur.

In einer bevorzugten Weiterbildung lässt sich der Öffnungsgrad der Bypassleitung über ein Einstellorgan mit elektrischem, pneumatischem oder hydraulischem Antrieb, vorzugsweise mit einem motorischen Antrieb einstellen.

Nachstehend soll die Ermittlung eines Vorgabewertes T_{V} für die Regenerationseintrittstemperatur T_{Ri} dargelegt werden:
Eine wichtige den Trocknungsvorgang charakterisierende Größe ist die Trocknungseintrittstemperatur, d. h. die Temperatur des Gases, mit der das Gas in den Trocknungssektor des Adsorptionstrockners eintritt, bzw. eine dafür charakteristische Temperatur. Diese Temperatur kann an einer beliebigen Stelle zwischen einem Regenerationsgaskühler, der vor Eintritt in den Trocknungssektor zuletzt durchströmt wird, und dem Trocknungssektor gemessen werden.

Anhand der Trocknungseintrittstemperatur ermittelt die Steuerungseinrichtung einen Vorgabewert T_{V} für die Regenerationseintrittstemperatur T_{Ri}. Das Einstellorgan wird so angesteuert, dass dieser Vorgabewert T_{V}, so lange der vorletzte Kompressor und der letzte Kompressor Gas verdichten, nicht wesentlich unterschritten wird mit Ausnahme von Anfahrvorgängen, bei denen sich die Kompressoren erst erwärmen müssen, bis die Regenerationseintrittstemperatur T_{Ri} den Vorgabewert T_{V} erreichen oder überschreiten kann. Das Einstellorgan bleibt geschlossen, wenn auch ohne Durchströmung der Bypassleitung der Vorgabewert T_{V} nicht unterschritten wird. Dadurch wird die Leistungsaufnahme der Kompressoranlage lediglich bedarfsabhängig erhöht, d. h. nur dann, wenn es für eine ausreichende Trocknung erforderlich ist und dann auch nur in dem Maße, in dem es erforderlich ist.

Das beschriebene Gesamtsystem ist dadurch sehr energieeffizient. Statt der Trocknungseintrittstemperatur könnten auch andere Temperaturen, die die Trocknungseintrittstemperatur beeinflussen oder von ihr beeinflusst werden, verwendet werden, wie beispielsweise
- die Temperaturen des Kühlmediums des Regenerationsgaskühlers, der vor Eintritt in den Trocknungssektor zuletzt durchströmt wird,
- die Temperaturen des Gases im und nach dem Austritt aus dem Trocknungssektor und/oder
- die Temperatur des Adsorptionsmaterials im Trocknungssektor.

Eine andere wichtige den Trocknungsvorgang charakterisierende Größe ist der Drucktaupunkt nach dem Austritt aus dem Trocknungssektor. Ist dieser über den bereits erwähnten Drucktaupunktsensor erfassbare Drucktaupunkt zu hoch, kann das Einstellorgan weiter geöffnet werden, ist er dagegen deutlich niedriger als erforderlich, kann das Einstellorgan weiter geschlossen werden. Alternativ kann auch ein Vorgabewert T_{V} für die Regenerationseintrittstemperatur T_{Ri} entsprechend geändert werden, d. h. bei einem zu hohen Drucktaupunkt erhöht und bei einem zu niedrigen gesenkt. Das Einstellorgan wird dann so angesteuert, dass der Vorgabewert T_{V} für die Regenerationseintrittstemperatur T_{Ri} nicht unterschritten wird. Statt eines Drucktaupunktsensors kann auch eine andere den Wassergehalt des Gasstroms charakterisierende Größe verwendet werden.

Hierbei ist zu beachten, dass eine Erhöhung der Regenerationseintrittstemperatur T_{Ri} sich erst dann auf den Drucktaupunkt auswirken kann, wenn das mit dieser Regenerationseintrittstemperatur T_{Ri} regenerierte Adsorptionsmaterial zum Trocknen des Gases eingesetzt wird. Es muss daher ein zeitlicher Verzug zwischen Regeneration und Trocknung berücksichtigt werden. Vorteilhafterweise wirkt die Steuerungseinrichtung daher mit dem bereits erwähnten Datenspeicher zusammen, um Messwerte von unterschiedlichen Zeitpunkten zu speichern und für die Ansteuerung des Einstellorgans bzw. für die Festlegung der Vorgabe für die Regenerationseintrittstemperatur T_{Ri} zu verwenden. So können dadurch für das zu einem Zeitpunkt im Trocknungssektor befindliche Adsorptionsmaterial, das für den zu diesem Zeitpunkt erreichten Drucktaupunkt relevant ist, die Regenerationseintrittstemperaturwerte berücksichtigt werden, die bei der Regeneration dieses Adsorptionsmaterials vorlagen, um die Vorgabetemperatur TV zu ermitteln. Dadurch ist eine stabilere Regelung des Drucktaupunktes möglich.

Für eine optimale Berücksichtigung der Temperatur- und Drucktaupunktwerte bei der Ermittlung des Vorgabewertes T_{V} ist es vorteilhaft, die Länge eines Zyklus zu kennen, nach dem die Adsorptionskammer relativ zum Regenerations- und Trocknungssektor wieder in der Ausgangsposition ist. Die Länge eines Zyklus kann ermittelt werden, wenn die Geschwindigkeit der Relativbewegung der Adsorptionskammer in der Steuerungseinrichtung als Wert vorliegt. Dies wird beispielsweise dadurch erreicht, dass von der Steuerungseinrichtung ein Steuerungssignal für den motorischen Antrieb der Adsorptionskammer des als Rotationstrockner ausgebildeten Adsorptionstrockners erzeugt wird und/oder dass der motorische Antrieb ein entsprechendes Signal hinsichtlich der Bewegung an einen entsprechenden Signaleingang der Steuerungseinrichtung übermittelt.

Eine besonders stabile Regelung kann erreicht werden, wenn Signaleingänge sowohl für den erfassten aktuellen Drucktaupunkt als auch für die Trocknungseintrittstemperatur an der Steuerungseinrichtung vorhanden sind. Dadurch kann bei einer Erhöhung der Trocknungseintrittstemperatur der Vorgabewert T_{V} für die Regenerationseintrittstemperatur T_{Ri} sofort angehoben werden. Hierdurch wird erreicht, dass kein (oder nur ein geringfügiger) Anstieg des Drucktaupunktes stattfindet, da schon eine Änderung des Vorgabewertes T_{V} erfolgen kann, bevor das Drucktaupunktsignal einen Wert oberhalb des festgelegten Grenzwerts für den Drucktaupunkt liefert. Wenn das Drucktaupunktsignal, z. B. wegen anderen Einflüssen, wie Anstieg der rel. Feuchte und Temperatur des von der Kompressoranlage angesaugten Gases, trotzdem den festgelegten Grenzwert für den Drucktaupunkt überschreitet, führt dies nur noch zu einer kleineren Änderung des Vorgabewertes T_{V}. Dadurch wird erreicht, dass der festgelegte Grenzwert für den Drucktaupunkt mit hoher Sicherheit nicht überschritten wird.

Bei Kompressoren mit veränderlichem Ansaugvolumenstrom (beispielsweise Kompressoren mit veränderlicher Drehzahl), verändert sich mit dem Ansaugvolumenstrom auch die Trocknungseintrittstemperatur. Bei einem niedrigen Ansaugvolumenstrom stellt sich eine niedrige Trocknungseintrittstemperatur ein. Für die Trocknung des niedrigen Ansaugvolumenstrom wäre daher nur eine niedrige Regenerationseintrittstemperatur T_{Ri} erforderlich. Wenn aber ausgehend von einem niedrigen Ansaugvolumenstrom der Ansaugvolumenstrom erhöht wird und dadurch auch die Trocknungseintrittstemperatur ansteigt, wäre die vorher an Hand der Trocknungseintrittstemperatur bei niedrigem Ansaugvolumenstrom ermittelte Regenerationseintrittstemperatur T_{Ri} für eine ausreichende Trocknung zu niedrig.

Es kann daher vorteilhaft sein, bei niedrigen Ansaugvolumenströmen als Vorgabewert für die Regenerationseintrittstemperatur T_{Ri} bereits den Wert festzusetzen, der sich aus der Trocknungseintrittstemperatur ergibt, die bei einem hohen Ansaugvolumenstrom erreicht werden wird. Dies kann durch die Steuerungseinrichtung näherungsweise berechnet werden, wenn die Information über den aktuellen und den maximalen Ansaugvolumenstrom für die Steuerungseinrichtung verfügbar ist. Dies wird dadurch erreicht, dass der Antrieb für die Kompressoren der Kompressoranlage über einen Signalausgang der Steuerungseinrichtung angesteuert werden und/oder ein Signaleingang vorgesehen ist, an Hand dessen der aktuelle Ansaugvolumenstrom ermittelt werden kann. Dies können beispielsweise Signale für die Frequenz des von einem Frequenzumrichter erzeugten Drehfeldes, mit dem der Antrieb für die Kompressoren betrieben wird, sein.

Die beschriebenen Größen wirken sich z. T. erst mit Verzögerung auf den Drucktaupunkt aus. Deswegen ist es vorteilhaft, wenn für die Ermittlung des Vorgabewerts T_{V} gespeicherte Betriebsdaten früherer Zeitpunkte verwendet werden können. Betriebsdaten des Adsorptionstrockners, die im mit der Steuerungseinrichtung zusammenwirkenden Datenspeicher gespeichert und für die Ansteuerung des Aktuators des Einstellorgans oder zur Ermittlung des Vorgabewertes für die Regenerationseintrittstemperatur T_{Ri} verwendet werden können, sind
- Regenerationseintrittstemperatur T_{Ri} bzw. Austrittstemperatur T_{Al} des Gases aus dem letzten Kompressor
- Trocknungseintrittstemperatur
- Trocknungsaustrittstemperatur
- Drucktaupunkt nach Trocknung
- Geschwindigkeit der Adsorptionskammer oder ein Maß für die Drehgeschwindigkeit des als Rotationstrockners ausgebildeten Adsorptionstrockners
- Ansaugvolumenstrom der Kompressoranlage oder eine andere den zu trocknenden Gasmassenstrom charakterisierende Größe
- Zeit seit letztem Start der Gasförderung

Eine weitere Verbesserung des Trocknungsprozesses wird erreicht, wenn zwischen Gasaustritt aus dem Zwischenkühler und der Zusammenführung mit der Bypassleitung ein Kondensatabscheider sowie ein Kondensatableiter vorgesehen werden.

Dadurch, dass durch die beschriebenen Maßnahmen sowohl die Gaseintritts- als auch die Gasaustrittstemperatur des letzten Kompressors erhöht werden, könnten Belastungsgrenzen des vorletzten Kompressors, des letzten Kompressors oder nachgeschalteter Komponenten überschritten werden. Um das zu vermeiden, wird ein Signaleingang für die Gaseintrittstemperatur des letzten Kompressors und/oder Signaleingänge für die Gasdrücke vor und/oder nach dem letzten Kompressor in der Steuerungseinrichtung vorgesehen. Anhand dieses Signals bzw. dieser Signale kann der Vorgabewert T_{V} für die Regenerationseintrittstemperatur T_{Ri} so bestimmt werden, dass die Belastungsgrenzen des vorletzten Kompressors, des letzten Kompressors und/oder nachgeschalteter Komponenten sicher eingehalten werden.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen
- Figur 1a: eine erste Ausführungsform einer Kompressoranlage zur Komprimierung von Gasen in einer zweistufigen Verdichtung nach der vorliegenden Erfindung,
- Figur 1b: eine zweite Ausführungsform einer Kompressoranlage zur Komprimierung von Gasen in einer zweistufigen Verdichtung nach der vorliegenden Erfindung,
- Figur 1c: eine dritte Ausführungsform einer Kompressoranlage zur Komprimierung von Gasen in einer zweistufigen Verdichtung nach der vorliegenden Erfindung,
- Figur 2: eine weitere Ausführungsform einer Kompressoranlage zur Komprimierung von Gasen in einer zweistufigen Verdichtung,
- Figur 3: eine Ausführungsform einer Kompressoranlage zur Komprimierung von Gasen in einer dreistufige Verdichtung,
- Figur 4a: ein Diagramm zur Erläuterung der Zusammenhänge zwischen Temperaturen und Taupunkten im Vergleich zwischen einer erfindungsgemäßen Anlage bzw. einem erfindungsgemäßen Verfahren und einer Anlage bzw. einem Verfahren nach dem Stand der Technik,
- Figur 4b: eine Veranschaulichung der Zusatzleistungsaufnahmen für die beiden Gesamtsysteme B und C des anhand von Figur 4a veranschaulichten Beispiels.

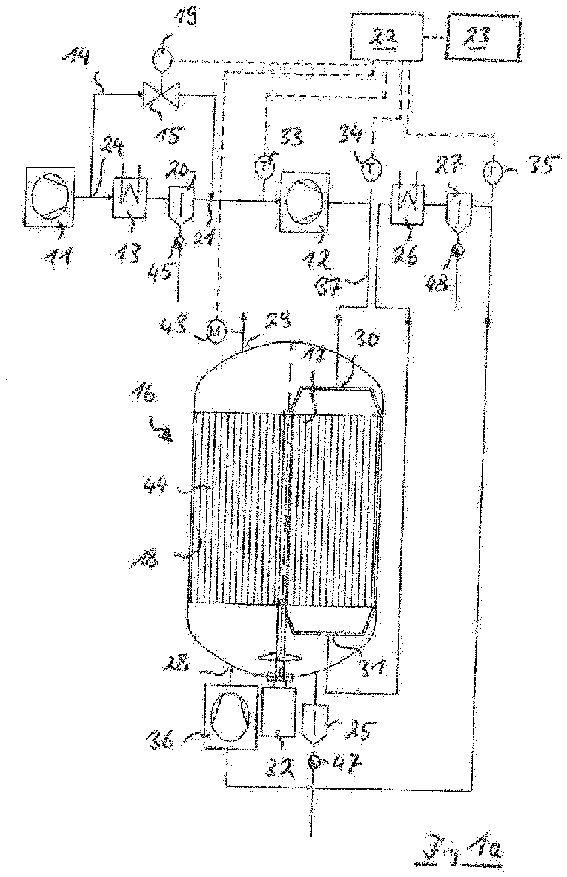

In Figur 1a ist eine erste Ausführungsform einer Kompressoranlage zur Komprimierung von Gasen in einer zweistufigen Verdichtung nach der vorliegenden Erfindung gezeigt. Die Kompressoranlage umfasst einen vorgelagerten (vorletzten) Kompressor 11, der bei der vorliegenden Ausführungsform die niedrigste Verdichterstufe darstellt und einen letzten Kompressor 12, der bei der vorliegenden Ausführungsform die höchste Verdichterstufe darstellt. Insgesamt handelt es sich, wie erwähnt, bei der vorliegenden Ausführungsform um eine Kompressoranlage mit zweistufiger Verdichtung.

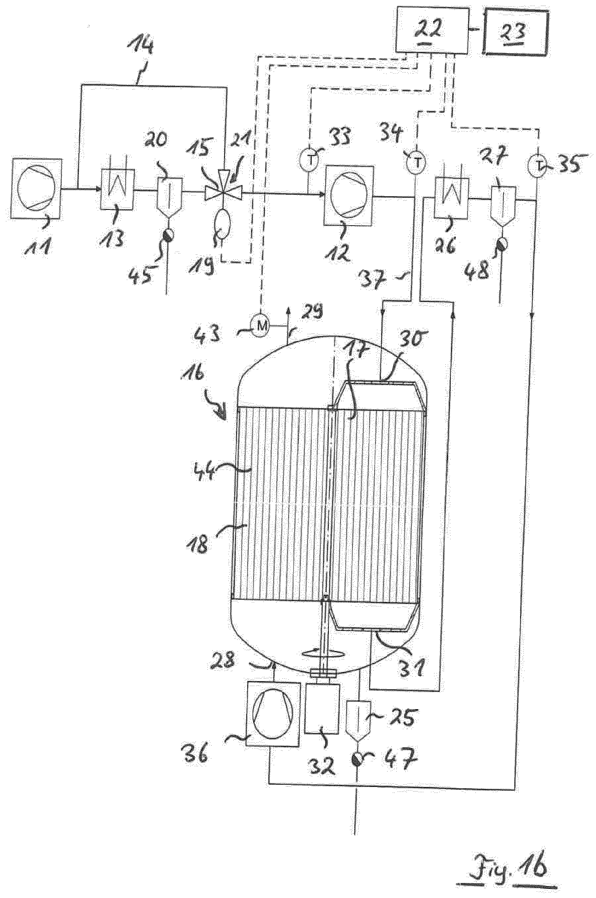

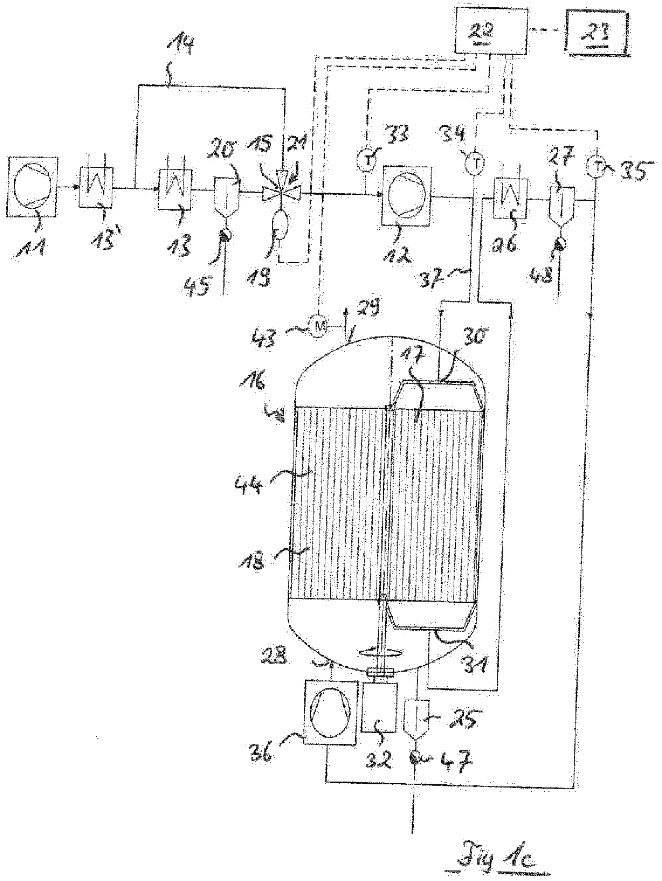

Generell können die erfindungsgemäße Kompressoranlage bzw. das erfindungsgemäße Verfahren mit unterschiedlichen Gasen betrieben werden. In vielen Anwendungsfällen handelt es sich aber bei dem zu verdichtenden Gas um Luft bzw. bei dem verdichteten Gas um Druckluft. So werden nachfolgend die Ausführungsbeispiele anhand der Figuren 1 bis 3 auch unter Bezugnahme auf den Beispielsfall, in dem das zu verdichtende Gas Luft darstellt, erläutert.

Zwischen vorgelagertem Kompressor 11 und letztem Kompressor 12 ist ein Zwischenkühler 13 und stromabwärts des Zwischenkühlers 13 ein Kondensatabscheider 20 und ein Kondensatableiter 45 angeordnet. Der Zwischenkühler 13 kann mit Kälte, insbesondere einem Kältefluid, wie kaltem Wasser oder Umgebungsluft, beaufschlagt werden und so die ihm vom vorgelagerten Kompressor 11 zugeführte verdichtete Druckluft abkühlen.

Die Abkühlung der im vorgelagerten Kompressor 11 komprimierten Druckluft ist unter Umständen aus mehreren Überlegungen geboten. Zum einen soll verhindert werden, dass in nachgelagerten Verdichterstufen, hier konkret im letzten Kompressor 12 auf eine Temperatur erhitzt wird, die über einer für den letzten Kompressor bzw. für angeschlossene Komponenten zuträglichen Betriebstemperatur liegt. Zum anderen weist kühlere Luft eine höhere Dichte auf und lässt sich insofern energieeffizienter weiterverdichten als erwärmte Luft. Im Hinblick auf die Energieeffizienz kann es insofern auch sinnvoll sein, die in einer vorgelagerten Stufe hier konkret im vorgelagerten Kompressor 11 verdichtete Druckluft abzukühlen.

Wird die Druckluft im Zwischenkühler 13 über ihren Drucktaupunkt abgekühlt, kondensiert in ihr enthaltene Feuchtigkeit aus. Über den bereits erwähnten Kondensatabscheider 20 und den Kondensatableiter 45 kann diese Feuchtigkeit, insbesondere das in der Druckluft enthaltene Wasser, abgeführt werden. Insofern kann durch den Zwischenkühler 13 und den Kondensatabscheider 20 bei einer Abkühlung über den Taupunkt hinaus die im vorgelagerten Kompressor 11 komprimierte Druckluft auch getrocknet werden.

Erfindungsgemäß ist vorgesehen, dass eine den Zwischenkühler 13 überbrückende Bypassleitung 14 vorgesehen ist. Die Bypassleitung 14 verläuft insofern zwischen einer Verzweigungsstelle 24 zwischen dem vorgelagerten Kompressor 11 und dem Zwischenkühler 13 und einem Vereinigungspunkt 21, der zwischen dem Kondensatabscheider 20 und dem letzten Kompressor 12 angeordnet ist. Innerhalb der Bypassleitung 14 ist ein Einstellorgan 15 vorgesehen, das hier konkret als ein über einen Aktuator 19 betätigbares Proportionalventil ausgebildet ist. Der - beispielsweise elektrisch angetriebene - Aktuator 19 kann von einer Steuerungseinrichtung 22 angesteuert werden, so dass eine stufenlose Einstellung des Einstellorgans 15, konkret des Proportionalventils auf Veranlassung der Steuerungseinrichtung 22 möglich ist.

Stromabwärts des letzten Kompressors 12 ist ein Adsorptionstrockner 16, der hier als Rotationstrockner ausgebildet ist, angeordnet. Der als Rotationstrockner ausgebildete Adsorptionstrockner umfasst einen Regenerationssektor 17 sowie einen Trocknungssektor 18. Der als Adsorptionstrockner ausgebildete Rotationstrockner kann aber noch weitere Sektoren, beispielsweise einen Kühlsektor oder auch mehrere Regenerationssektoren bzw. mehrere Trocknungssektoren, umfassen.

Der Adsorptionstrockner 16 ist über eine Verbindungsleitung 37 derart an den letzten Kompressor 12 angeschlossen, dass der gesamte verdichtete Gasstrom zunächst an einen Eingang 30 des Regenerationssektors 17, anschließend durch den Regenerationssektor 17 und von einem Ausgang 31 des Regenerationssektors 17 anschließend zu dem Trocknungssektor 18 geführt ist. Am Trocknungssektor 18 gelangt die Druckluft von einem Eingang 28 des Trocknungssektors 18 durch diesen hindurch und wird an einem Ausgang 29 des Trocknungssektors zur Verfügung gestellt. Die gesamte heiße Druckluft aus dem letzten Kompressor 12 strömt über eine Verbindungsleitung 37 zu dem Regenerationssektor 17 des Adsorptionstrockners 16.

Innerhalb eines Gehäuseabschnitts des Adsorptionstrockners 16, in dem der Regenerationssektor 17 und der Trocknungsektor 18 definiert sind, ist ein erster trocknerseitiger Kondensatabscheider 25 mit einem ersten trocknerseitigen Kondensatableiter 47 angeordnet, um am Eintritt des Trocknungssektors zum Beispiel durch Abkühlung der feuchten Luft bei Stillstand der Kompressoranlage anfallendes Wasser abzuführen. In Strömungsrichtung des verdichteten Gases ist zwischen dem Regenerationssektor 17 und dem Trocknungssektor 18 weiterhin ein Regenerationsgas-Kühler 26 vorgesehen, an den sich ein zweiter trocknerseitiger Kondensatabscheider 27 mit einem zweiten trocknerseitigen Kondensatableiter 48 anschließt. Um einen gleichen oder bevorzugt höheren Druck am Eingang des Trocknungssektors 18 als am Ausgang des Regenerationssektors 17 vorzusehen, kann noch eine Druckerhöhungseinrichtung 36 zwischen dem zweiten trocknerseitigen Kondensatabscheider 27 und dem Eingang 28 in den Trocknungssektor 18 vorgesehen sein.

Die Steuerungseinrichtung 22 steht noch mit einem motorischen Antrieb 32 des Adsorptionstrockners 16 sowie mit mehreren Sensoren, die über die Zustandsbedingungen der Druckluft im Druckluftsystem Auskunft geben in Wirkverbindung, konkret mit einem ersten Temperatursensor 33, einem zweiten Temperatursensor 34 sowie einem dritten Temperatursensor 35 in Wirkverbindung. Der erste Temperatursensor 33 ist stromab des Vereinigungspunktes 21 und stromauf des letzten Kompressors 12 vorgesehen und erfasst somit die Temperatur der verdichteten Luft vor Eintritt in den letzten Kompressor 12. Der zweite Temperatursensor 34 ist zwischen letztem Kompressor 12 und dem Eingang 30 in den Regenerationssektor 17 angeordnet und erfasst somit die Temperatur der verdichteten Druckluft nach dem letzten Kompressor 12. Der dritte Temperatursensor 35 ist nach dem zweiten trocknerseitigen Kondensatabscheider 27 und vor der Druckerhöhungseinrichtung 36, damit gleichzeitig auch vor dem Eingang 28 in den Trocknungssektor 18 vorgesehen.

Durch die Erfassung der Temperaturen vor dem Eingang 28 in den Trocknungssektor 18 bzw. vor dem Eingang 30 in den Regenerationssektor 17 und vor dem Eingang in den letzten Kompressor 12 lässt sich über das Einstellorgan 15 die Temperatur so steuern, dass eine optimale Regenerationseintrittstemperatur T_{Ri} gegeben ist. Diese wird mit dem zweiten Temperatursensor 34 gleichzeitig überwacht.

Alternativ oder zusätzlich zum ersten Temperatursensor 33, zweiten Temperatursensor 34 oder zum dritten Temperatursensor 35 kann auch ein Drucktaupunktsensor 43 am Ausgang 29 des Trocknungssektors 18 des Adsorptionstrockners 16 vorgesehen sein. Der Drucktaupunktsensor 43 ermittelt einen aktuellen Drucktaupunkt, der am Trocknungssektor 18 ausgegebenen Druckluft. Nähert sich der Drucktaupunkt der ausgegebenen Druckluft dem festgelegten Grenzwert für den Drucktaupunkt, werden umgehend Maßnahmen ergriffen, konkret wird auf das Einstellorgan 15 dergestalt eingewirkt, dass ein zuvor festgelegter Grenzwert GW_{T} für den Drucktaupunkt mit ausreichender Sicherheit eingehalten wird. Konkret kann vorgesehen sein, dass wenn der aktuelle Drucktaupunkt der am Trocknungssektor 18 ausgegebenen Druckluft in Richtung auf den Grenzwert des Drucktaupunkts steigt, die Bypassleitung 14 über das Einstellorgan 15 derart geöffnet wird, dass die Regenerationseintrittstemperatur steigt und unter Inkaufnahme einer zusätzlichen Energieaufnahme durch höhere Regenerationseintrittstemperaturen eine verbesserte Trocknung der Druckluft erzielt wird, so dass eine Überschreitung des festgelegten Drucktaupunkts mit ausreichender Sicherheit verhindert wird.

In Figur 1b ist eine zweite Ausführungsform einer Kompressoranlage zur Komprimierung von Gasen in einer zweistufigen Verdichtung nach der vorliegenden Erfindung dargestellt. Diese zweite Ausführungsform einer Kompressoranlage entspricht weitestgehend dem Aufbau der anhand von Figur 1a veranschaulichten Ausführungsform einer Kompressoranlage, die sich von der anhand von Figur 1a veranschaulichten Ausführungsform nur dadurch unterscheidet, dass das Einstellorgan 15 am Ende der Bypassleitung 14 im Vereinigungspunkt 21 als Mischventil ausgebildet ist. Das als Mischventil ausgebildete Einstellorgan 15 kann insofern den über die Bypassleitung 14 und den über den Zwischenkühler 13 geführten Teilstrom einstellen und dabei auch einerseits den über die Bypassleitung 14 geführten Teilstrom und andererseits den über den Zwischenkühler 13 geführten Teilstrom komplett absperren. Das als Mischventil ausgebildete Einstellorgan 15 ist auch hier über einen Aktuator 19 betätigbar, so dass der beispielsweise elektrisch angetriebene Aktuator von der Steuerungseinrichtung 22 angesteuert werden kann.

In Figur 1c ist eine dritte Ausführungsform einer Kompressoranlage zur Komprimierung von Gasen in einer zweifachen Verdichtung veranschaulicht, die sich von der anhand von Figur 1b dargestellten Ausführungsform dadurch unterscheidet, dass zwischen vorletztem Kompressor 11 und letztem Kompressor 12 der bereits erwähnte Zwischenkühler 13 als letzter Zwischenkühler sowie ein diesem vorgeschalteter Zwischenkühler als vorletzter Zwischenkühler 13' ausgebildet ist. Die Bypassleitung 14 überbrückt in der vorliegenden Ausführungsform aber nur den in Strömungsrichtung betrachtet zwischen vorletztem Kompressor 11 und letztem Kompressor 12 letzten Zwischenkühler 13, nicht hingegen den zwischen vorletztem Kompressor 11 und letztem Kompressor 12 vorletzten Zwischenkühler 13'. Auch hier ist - entsprechend der Ausführungsform nach Figur 1b - das Einstellorgan 15 als Mischventil ausgebildet, das im Vereinigungspunkt 21 vorgesehen ist und insofern eine Einstellung der über die Bypassleitung 14 bzw. den Zwischenkühler 13 geführten Teilströme bewirkt. Insbesondere kann der über den Zwischenkühler 13 geführte Teilstrom bzw. der über die Bypassleitung 14 geführte Teilstrom komplett abgesperrt werden. Das als Mischventil ausgebildete Einstellorgan 15 kann mittels eines Aktuators 19 betätigt werden, der beispielsweise von der Steuereinrichtung 22 angesteuert werden kann.

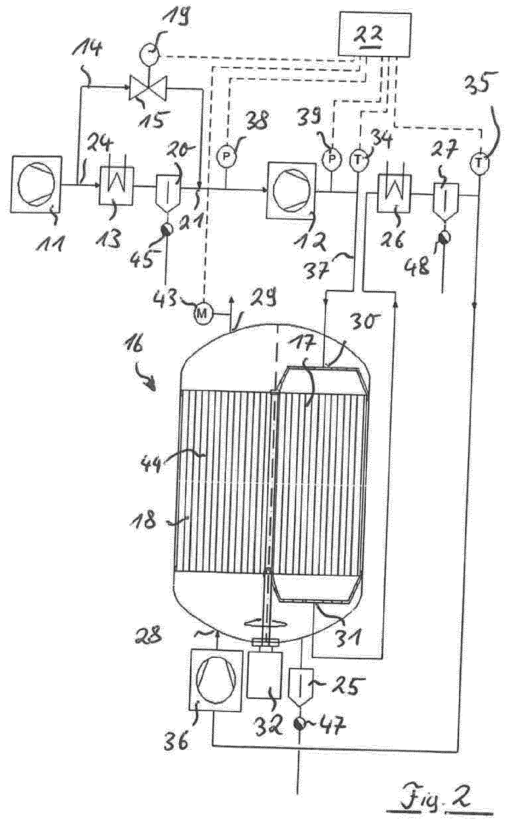

In Figur 2 ist eine abgewandelte Ausführungsform einer Kompressoranlage zur Komprimierung von Gasen in einer zweistufigen Verdichtung dargestellt. Diese Kompressoranlage entspricht weitestgehend dem Aufbau der anhand der Figur 1a veranschaulichten Ausführungsform einer Kompressoranlage, die sich von der anhand von Figur 1a veranschaulichten Ausführungsform nur dadurch unterscheidet, dass anstelle des ersten Temperatursensors 33 in der Ausführungsform nach Figur 1a ein erster Druckmesssensor 38 sowie ein zweiter Druckmesssensor 39 vorgesehen sind. Der erste Druckmesssensor 38 ist dabei zwischen dem vorletzten Kompressor 11 und dem letzten Kompressor 12, insbesondere zwischen dem Vereinigungspunkt 21 und dem letzten Kompressor 12 angeordnet und erfasst insofern den Eintrittsdruck des letzten Kompressors 12. Der zweite Druckmesssensor 39 ist ausgangsseitig des letzten Kompressors 12 vorgesehen und zwar stromaufwärts oder stromabwärts des zweiten Temperatursensors 34 bzw. an gleicher Position wie der zweite Temperatursensor 34. Erster Druckmesssensor 38 und zweiter Druckmesssensor 39 stehen mit der Steuerungseinrichtung 22 in Wirkverbindung und übergeben die erfassten Druckwerte an die Steuerungseinrichtung 22.

Aus dem Druckverhältnis zwischen Eintrittsdruck des letzten Kompressors 12 und Austrittsdruck des letzten Kompressors 12 und der über den zweiten Temperatursensor 34 erfassten Austrittstemperatur des letzten Kompressors 12 kann dann die Eintrittstemperatur des letzten Kompressors 12 näherungsweise ermittelt werden.

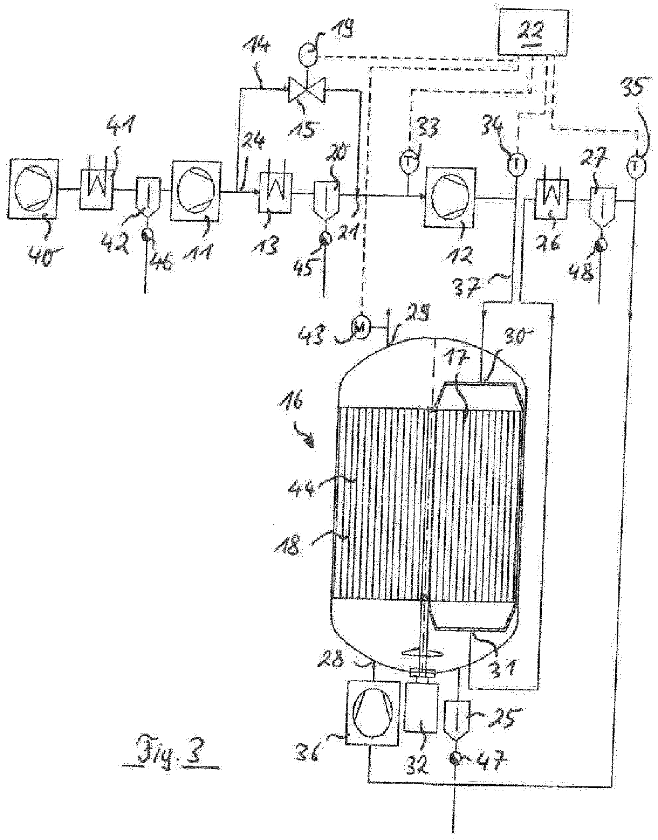

In Figur 3 ist eine Ausführungsform einer Kompressoranlage zur Komprimierung von Gasen in einer dreifachen Verdichtung veranschaulicht. Das Fließschema der in der Ausführungsform nach Figur 3 veranschaulichten Ausführungsform unterscheidet sich von dem Fließschema der Ausführungsform, wie sie anhand von Figur 1 veranschaulicht wurde, nur dadurch, dass vor dem vorgelagerten Kompressor 11 noch eine zusätzliche niedrigere Verdichterstufe als Eingangskompressor 40 und zwischen dem Eingangskompressor 40 und dem vorgelagerten Kompressor 11 noch ein zweiter Zwischenkühler 41, ein zweiter Kondensatabscheider 42 sowie ein zweiter Kondensatableiter 46 vorgesehen ist.

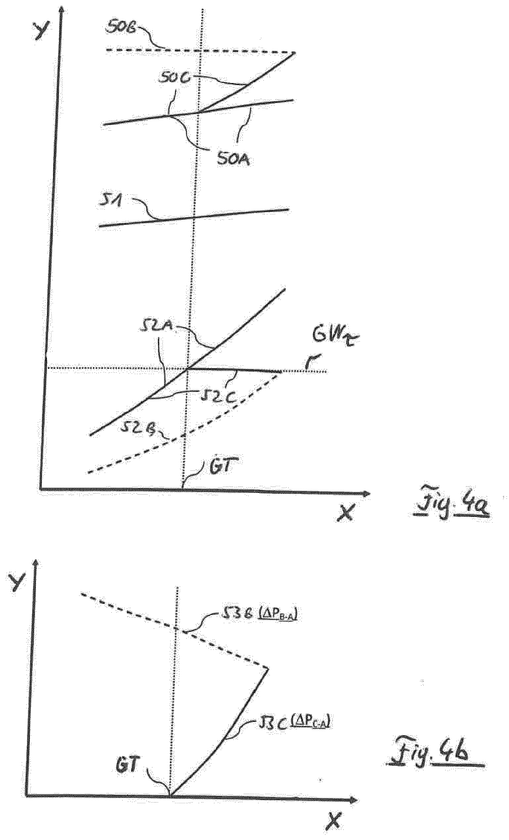

In Figur 4a ist ein Diagramm zur Erläuterung der Zusammenhänge zwischen Temperaturen und Taupunkten im Vergleich zwischen einer erfindungsgemäßen Anlage bzw. einem erfindungsgemäßen Verfahren und einer Anlage bzw. einem Verfahren nach dem Stand der Technik veranschaulicht. Konkret sind dort Gastemperaturen und Drucktaupunkte am Ausgang des Trocknungssektors (y-Achse) in Abhängigkeit von der Kühlmediumtemperatur (x-Achse) dargestellt.

In diesem anhand der Figur 4a veranschaulichten Beispiel ist die Kühlmediutemperatur die Temperatur, mit der das Kühlmedium in das Gesamtsystem eintritt. Das Kühlmedium tritt mit dieser Temperatur insofern parallel in den Zwischenkühler 13 und den Regenerationsgaskühler 26 ein. Die qualitativen Aussagen gelten aber genauso, wenn das Kühlmedium den Zwischenkühler 13 und den Regenerationsgaskühler 26 sequentiell durchströmt, da auch in diesem Fall eine Erhöhung der Kühlmediumtemperatur, mit der das Kühlmedium in das Gesamtsystem eintritt, eine Erhöhung der Gasaustrittstemperatur dieser beiden Kühler, also des Zwischenkühlers 13 und des Regenerationsgaskühlers 26, zur Folge hat.

Für die gezeigten Beispiele werden Gasdrücke, Ansauggasstrom der Kompressoren, relative Feuchte des angesaugten Gases als konstant angenommen. Es werden ein Gesamtsystem A, bei dem keine Maßnahmen zur Beeinflussung der Regenerationseintrittstemperatur T_{Ri} durchgeführt werden, ein Gesamtsystem B, bei dem die Regenerationseintrittstemperatur T_{Ri} auf einen konstanten ausreichend hohen Wert geregelt wird und ein Gesamtsystem C mit der erfindungsgemäßen bedarfsabhängigen Regelung der Regenerationseintrittstemperatur T_{Ri} betrachtet. Die Kurve 51 stellt den Verlauf der Trocknungseintrittstemperatur (erfassbar über den dritten Temperatursensor 35) dar. Dieser Verlauf ist in allen drei betrachteten Fällen A, B und C identisch und steigt mit der Kühlmediumtemperatur an.

Die Kurve 50A gibt den Temperaturverlauf der Regenerationseintrittstemperatur T_{Ri} für das Gesamtsystem A an. Sie verläuft in etwa parallel zur Trocknungseintrittstemperatur. Der Drucktaupunktverlauf 52A des Gesamtsystems A steigt kontinuierlich an und überschreitet in diesem Beispiel bei einer Grenztemperatur GT den Grenzwert GW_{T} für den Drucktaupunkt.

Für Gesamtsystem B, bei dem die Regenerationseintrittstemperatur T_{Ri} gemäß Kurve 50B auf einem konstant hohen Wert gehalten wird, wird der Drucktaupunkt 52B unterhalb des Grenzwertes GW_{T} gehalten. Allerdings wird er im gesamten betrachteten Temperaturintervall des Kühlmediums abgesenkt, so dass unnötig tiefe Drucktaupunkte erreicht werden. Dafür gibt es einen erheblichen Unterschied zwischen der konstanten Regenerationseintrittstemperatur B und der Regenerationsseintrittstemperatur T_{Ri} 50A des Gesamtsystems A im gesamten Betriebsbereich. Für höhere Regenerationseintrittstemperaturen ist eine höhere Leistungsaufnahme des Gesamtsystems erforderlich. Gesamtsystem B mit konstanter Regenerationseintrittstemperatur hat daher im gesamten Betriebsbereich eine erheblich höhere Leistungsaufnahme als das Gesamtsystem A.

Bei Gesamtsystem C mit der erfindungsgemäßen bedarfsabhängigen Regelung der Regenerationseintrittstemperatur T_{Ri} ist die Regenerationseintrittstemperatur T_{Ri} (Linie 50C) nur für Kühlmedientemperaturen oberhalb der Grenztemperatur GT im Vergleich zum Gesamtsystem A höher und auch nur so viel höher, dass der Grenzwert GW_{T} für den Drucktaupunkt hier nicht überschritten wird. Der Verlauf 50C der Regenerationseintrittstemperatur T_{Ri} beim Gesamtsystem C liegt deutlich unterhalb des Verlaufs 50B bei konstanter Regelung. Dadurch ist der Gesamtleistungsbedarf geringer und das Verfahren ist erheblich energieeffizienter.

Für das in Fig. 4a betrachtete Beispiel sind in Fig. 4b die Zusatzleistungsaufnahmen (y-Achse) der beiden Gesamtsysteme B und C bezogen auf das Gesamtsystem A in Abhängigkeit der Kühlmediumtemperatur (x-Achse) dargestellt, d. h. die Differenz zwischen der Leistungsaufnahme, die das Gesamtsystem B bzw. C aufweist, und der Leistungsaufnahme, die das System A bei gleichen Betriebsbedingungen aufweist.

Die Linie 53B zeigt die Zusatzleistungsaufnahme ΔP_{B-A} des Gesamtsystems B, die Linie 53C die Zusatzleistungsaufnahme ΔP_{C-A} des Gesamtsystems C. In dem betrachteten Betriebsbereich soll bei den Gesamtsystemen B und C, wie in Fig. 4a gezeigt, der Grenzwert GW_{T} für den Drucktaupunkt nicht überschritten werden. Der konstant vorgegebene Wert für die Regenerationseintrittstemperatur T_{Ri} wurde daher so hoch eingestellt, dass der Grenzwert GW_{T} bei der höchsten Kühlmediumtemperatur des betrachteten Betriebsbereichs und damit dem ungünstigsten Fall gerade erreicht wird. An diesem Punkt haben die Systeme B und C, wie in Fig. 4a dargestellt, die gleiche Regenerationseintrittstemperatur T_{Ri} und den gleichen Drucktaupunkt und dadurch auch die gleiche Zusatzleistungsaufnahme.

Beim Gesamtsystem B wird die Zusatzleistungsaufnahme aber umso höher, je niedriger die Kühlmediumtemperatur ist. Dies liegt daran, dass beim Gesamtsystem B die energetischen Vorteile, die diese niedrigeren Kühlmediumtemperaturen beim Gesamtsystem A bewirken, nicht genutzt werden. Bei niedrigen Kühlmediumtemperaturen wird beim Vergleichssystem A eine energetisch vorteilhafte niedrige Gaseintrittstemperatur der höchsten Verdichterstufe bewirkt, beim Gesamtsystem B wird z. B. die Gaseintrittstemperatur durch die Regelung künstlich erhöht, so dass keine energetische Verbesserung durch niedrigere Kühlmediumtemperaturen erreicht wird.

Beim Gesamtsystem C ist der Zusatzleistungsbedarf ΔP_{C-A} umso niedriger, je niedriger die Kühlmediumtemperatur ist, da der Vorgabewert für die Regenerationseintrittstemperatur T_{Ri} bedarfsabhängig bei niedrigeren Regenerationseintrittstemperaturen T_{Ri} abgesenkt wird. Unterhalb der Grenztemperatur GT wird beim Gesamtsystem A der Grenzwert GW_{T} für den Drucktaupunkt unterschritten (vgl. Fig. 4a). Es ist in diesem Bereich daher nicht notwendig, dass die Regenerationseintrittstemperatur T_{Ri} erhöht wird. Bei der bedarfsabhängigen Regelung des Gesamtsystems C wird daher unterhalb der Grenztemperatur GT keine höhere Regenerationseintrittstemperatur T_{Ri} als die, die beim Gesamtsystem A vorliegt, als Vorgabewert bestimmt, d. h. das Einstellorgan 15 hält die Bypassleitung 14 verschlossen. Daher erfolgt unterhalb der Grenztemperatur GT beim Gesamtsystem C keine Zusatzleistungsaufnahme.

### Bezugszeichenliste

- 11: vorletzter Kompressor
- 12: letzter Kompressor
- 13, 13': Zwischenkühler
- 14: Bypassleitung
- 15: Einstellorgan
- 16: Adsorptionstrockner
- 17: Regenerationssektor
- 18: Trocknungssektor
- 19: Aktuator
- 20: Kondensatabscheider
- 21: Vereinigungspunkt
- 22: Steuerungseinrichtung
- 23: Datenspeicher
- 24: Verzweigungsstelle
- 25: erster trocknerseitiger Kondensatabscheider
- 26: Regenerationsgas-Kühler
- 27: zweiter trocknerseitiger Kondensatabscheider
- 28: Eingang (Trocknungssektor)
- 29: Ausgang (Trocknungssektor)
- 30: Eingang (Regenerationssektor)
- 31: Ausgang (Regenerationssektor)
- 32: motorischer Antrieb
- 33: erster Temperatursensor
- 34: zweiter Temperatursensor
- 35: dritter Temperatursensor
- 36: Druckerhöhungseinrichtung
- 37: Verbindungsleitung
- 38: erster Druckmesssensor
- 39: zweiter Druckmesssensor
- 40: Eingangskompressor
- 41: (zweiter) Zwischenkühler
- 42: (zweiter) Kondensatabscheider
- 43: Drucktaupunktsensor
- 44: Adsorptionskammer
- 45: Kondensatableiter
- 46: (zweiter) Kondensatableiter
- 47: erster trocknerseitiger Kondensatableiter
- 48: zweiter trocknerseitiger Kondensatableiter
- T_{Ri}: Regenerationseintrittstemperatur
- T_{Al}: Austrittstemperatur aus dem letzten Kompressor
- GW_{T}: Grenzwert für den Drucktaupunkt
- GT: Grenztemperatur

## Patentansprüche

1. Kompressoranlage zur Komprimierung von Gasen in einer mehrstufigen Verdichtung umfassend
- mehrere in Serie geschaltete Kompressoren (11, 12), umfassend mindestens einen, in Strömungsrichtung vorletzten Kompressor (11) und einen letzten Kompressor (12), der innerhalb der mehrstufigen Verdichtung die höchste Verdichterstufe definiert,
- einen oder mehrere Zwischenkühler (13) zwischen vorletztem Kompressor (11) und letztem Kompressor (12)
- und einen dem letzten Kompressor (12) nachgeschalteten Adsorptionstrockner (16), der als Rotationstrockner mit einer rotierenden Adsorptionskammer (44) ausgebildet ist und innerhalb der Adsorptionskammer einen Regenerationssektor (17) sowie einen Trocknungssektor (18) umfasst,
wobei der Regenerationssektor (17) am letzten Kompressor (12) in einer solchen Weise angeschlossen ist, dass der vom letzten Kompressor (12) ausgegebene verdichtete Gasstrom im Vollstromprinzip durch den Regenerationssektor (17) des Adsorptionstrockners (16) geführt ist,
**dadurch gekennzeichnet, dass**
zwischen vorletztem Kompressor (11) und letztem Kompressor (12) weiterhin eine den oder mindestens einen Zwischenkühler (13) überbrückende Bypassleitung (14) angeordnet ist, in der ein Einstellorgan (15) vorgesehen ist, um den über die Bypassleitung (14) geführten Gasstrom und damit die Regenerationseintrittstemperatur T_{Ri} des verdichteten Gases in den Regenerationssektor (17) bedarfsgerecht einstellen zu können.

2. Kompressoranlage nach Anspruch 1, **dadurch gekennzeichnet, dass** der vorletzte Kompressor (11) der erste Kompressor in Strömungsrichtung ist und die Kompressoren (11, 12) zur Erzielung einer zweistufigen Verdichtung hintereinander geschaltet sind.

3. Kompressoranlage nach Anspruch 1 oder 2, **dadurch gekennzeichnet, dass** das Einstellorgan (15)
- zu einer kontinuierlichen bzw. stetigen Einstellung des Gasstroms
- oder zu einer stufenweisen Einstellung des Gasstroms
- und/oder zur bedarfsweisen kompletten Absperrung und/oder Öffnung eines dem Einstellorgan (15) zugeordneten Leitungsquerschnitts der Bypassleitung (14)
ausgebildet ist.

4. Kompressoranlage nach einem der Ansprüche 1 bis 3, **dadurch gekennzeichnet, dass** das Einstellorgan (15) mit einem Aktuator (19) gekoppelt ist, der zur elektrischen, pneumatischen oder hydraulischen Betätigung des Einstellorgans ausgebildet ist.

5. Kompressoranlage nach Anspruch 4, **dadurch gekennzeichnet, dass** der Aktuator motorisch angetrieben ist.

6. Kompressoranlage nach einem der Ansprüche 1 bis 5, **dadurch gekennzeichnet, dass** ein Kondensatabscheider (20) vorgesehen ist, der stromabwärts des oder der Zwischenkühler (13) und stromaufwärts eines Vereinigungspunktes (21) angeordnet ist, an dem der über die Bypassleitung (14) geführte Gasstrom mit dem über den oder die Zwischenkühler (13) geführte Gasstrom vor Eintritt in den letzten Kompressor (12) vereinigt wird.

7. Kompressoranlage nach einem der Ansprüche 1 bis 6, **dadurch gekennzeichnet, dass** weiterhin eine Steuerungseinrichtung (22) vorgesehen ist, die mit dem Einstellorgan (15) bzw. einem dem Einstellorgan (15) zugeordneten Aktuator (19) in Wirkverbindung steht, um bedarfsweise, insbesondere in Abhängigkeit der aktuellen Zustandsdaten des zu verdichtenden Gases oder des verdichteten Gases, wie etwa der Luftfeuchte der angesaugten Luft und/oder der Luftfeuchte des aus dem Trocknungssektor (18) ausgegebenen verdichteten Gases auf das Einstellorgan (15) einzuwirken.

8. Kompressoranlage nach Anspruch 7, **dadurch gekennzeichnet, dass** die Steuerungseinrichtung (22) ein oder mehrere Signaleingänge umfasst, insbesondere
- einen Signaleingang für eine Austrittstemperatur am oder stromabwärts des letzten Kompressors (12),
- einen Signaleingang für mindestens ein den Trocknungsprozess charakterisierendes Signal, wie die Eintrittstemperatur in den Trocknungssektor (18), den Drucktaupunkt des aus dem Trocknungssektor (18) ausgegebenen verdichteten Gases und/oder für eine Kühlmediumtemperatur,
- einen Signaleingang für mindestens ein den Verdichtungsprozess des letzten Kompressors (12) charakterisierendes Signal,
- wie eine Gaseintrittstemperatur an diesem Kompressor,
- einen Gasaustrittsdruck dieses Kompressors,
- einen Gaseintrittsdrucks dieses Kompressors,
- eine Betriebstemperatur dieses Kompressors oder nachgeschalteter Komponenten,
- einen Signaleingang für mindestens ein den Verdichtungsprozess des vorletzten Kompressors charakterisierendes Signal,
- wie eine Gasaustrittstemperatur des vorletzten Kompressors (11), oder
- einen Gasaustrittsdruck des vorletzten Kompressors (11),
- einen Signaleingang für die Drehzahl eines oder mehrerer Kompressoren (11, 12), und/oder
- einen Signaleingang für die Drehzahl der Adsorptionskammer (44).

9. Kompressoranlage nach Anspruch 7 oder 8, **dadurch gekennzeichnet, dass** ein Drucktaupunktsensor (43) vorgesehen ist, der zur Erfassung des Drucktaupunkts des am Trocknungssektor (18) ausgegebenen verdichteten Gases ausgebildet ist und mit der Steuerungseinrichtung (22) in Wirkverbindung steht, derart, dass das Einstellorgan (15) über die Steuerungseinrichtung (22) in Abhängigkeit des Drucktaupunkts des am Trocknungssektor (18) ausgegebenen verdichteten Gases einstellbar ist.

10. Kompressoranlage nach einem der Ansprüche 1 bis 9, **dadurch gekennzeichnet, dass** die Steuerungseinrichtung (22) mit einem Datenspeicher (23) für Betriebsdaten des Adsorptionstrockners (16) in Wirkverbindung steht.

11. Kompressoranlage nach einem der Ansprüche 7 bis 10, **dadurch gekennzeichnet, dass** die Steuerungseinrichtung (22) auch mit den Kompressoren (11, 12) in Wirkverbindung steht und die Kompressoren (11, 12) ansteuert, insbesondere deren Drehzahl einstellt und/oder deren Betriebsdaten, insbesondere deren Drehzahl, erfasst.

12. Verfahren zum Betreiben einer Kompressoranlage zur Erzielung einer mehrstufigen Verdichtung umfassend mehrere in Serie geschaltete Kompressoren (11, 12), darunter einen in Strömungsrichtung vorletzten Kompressor (11) und einen letzten Kompressor (12), der innerhalb der mehrstufigen Verdichtung die höchste Verdichterstufe definiert sowie einen dem letzten Kompressor (12) nachgeschalteten Adsorptionstrockner (16), der als Rotationstrockner ausgebildet ist und einen Regenerationssektor (17) sowie einen Trocknungssektor (18) umfasst, wobei der vom letzten Kompressor (12) ausgegebene Gasstrom im Vollstromprinzip durch den Regenerationssektor (17) des Adsorptionstrockners (16) geführt wird,
**dadurch gekennzeichnet, dass**
über die Einstellung eines Öffnungsgrades einer Bypassleitung (14), die einen oder mehrere zwischen vorletztem Kompressor (11) und letztem Kompressor (12) vorgesehene Zwischenkühler (13) ganz oder teilweise überbrückt, die Regenerationseintrittstemperatur T_{Ri} des verdichteten Gases in den Regenerationssektor (17) bedarfsgerecht eingestellt wird.

13. Verfahren nach Anspruch 12, **dadurch gekennzeichnet, dass** die Regenerationseintrittstemperatur T_{Ri} in den Regenerationssektor (17) dergestalt eingestellt wird, dass das aus dem Trocknungssektor (18) austretende verdichtete Gas einen festgelegten Mindestgrenzwert für den Trocknungsgrad einhält bzw. der Drucktaupunkt des aus dem Trocknungssektor (18) entnommenen verdichteten Gases einen festgelegten Grenzwert GW_{T} für den Drucktaupunkt nicht überschreitet.

14. Verfahren nach Anspruch 13, **dadurch gekennzeichnet, dass** der Grenzwert GW_{T} für den Drucktaupunkt anwenderseits auf einen konstanten Wert eingestellt wird oder in Abhängigkeit der Applikation festgelegt bzw. eingestellt wird.

15. Verfahren nach einem der Ansprüche 12 bis 14, **dadurch gekennzeichnet, dass** die bedarfsgerechte Einstellung der Regenerationseintrittstemperatur T_{Ri} in den Regenerationssektor in Abhängigkeit der konkreten Zustandsdaten des zu verdichtenden Gases oder des verdichteten Gases, wie etwa der Feuchte des angesaugten Gases und/oder der Feuchte des aus dem Trocknungssektor (18) ausgegebenen verdichteten Gases während des Betriebs der Kompressoranlage erfolgt.

16. Verfahren nach einem der Ansprüche 12 bis 15, **dadurch gekennzeichnet, dass** die bedarfsgerechte Einstellung der Eintrittstemperatur T_{Ri} in Abhängigkeit eines erfassten Drucktaupunkts des verdichteten Gases am Ausgang aus dem Trocknungssektor (18) erfolgt.

17. Verfahren nach einem der Ansprüche 12 bis 16, **dadurch gekennzeichnet, dass** der Öffnungsgrad der Bypassleitung unter Beachtung der maximal zulässiger Betriebstemperaturen der stromab der Bypassleitung (14) von verdichtetem Gas durchströmten Komponenten, insbesondere des letzten Kompressors (12) begrenzt wird.

18. Verfahren nach einem der Ansprüche 12 bis 17, **dadurch gekennzeichnet, dass** der Öffnungsgrad der Bypassleitung über ein Einstellorgan mit elektrischem, pneumatischem oder hydraulischem Antrieb, vorzugsweise mit einem motorischen Antrieb, eingestellt wird.

## Claims

1. A compressor system for compressing gases in a multistage compression, comprising
- multiple compressors (11, 12) connected in series, comprising at least one next-to-last compressor (11) in a flow direction and a last compressor (12) which defines the highest compression stage within the multistage compression,
- one or more intercoolers (13) between the next-to-last compressor (11) and the last compressor (12),
- and an adsorption dryer (16) connected downstream of the last compressor (12), the adsorption dryer (16) being designed as a rotation dryer having a rotating adsorption chamber (44) and inside of the adsorption chamber comprising a regeneration sector (17) and a drying sector (18),
wherein the regeneration sector (17) is connected to the last compressor (12) such that a compressed gas stream output from the last compressor (12) is guided according to a full stream principle through the regeneration sector (17) of the adsorption dryer (16),
**characterized in that**
a bypass line (14) which bypasses the one or at least one intercooler (13) is moreover arranged between the next-to-last compressor (11) and the last compressor (12), in which bypass line (14) a setting element (15) is provided to be able to set a gas stream guided via the bypass line (14) and therefore a regeneration entry temperature T_{Ri} of the compressed gas into the regeneration sector (17) appropriately.

2. The compressor system according to claim 1, **characterized in that** the next-to-last compressor (11) is the first compressor in the flow direction and the compressors (11, 12) are connected in succession to achieve a two-stage compression.

3. The compressor system according to claim 1 or 2, **characterized in that** the setting element (15) is designed
- for a continuous or steady setting of the gas stream,
- or for a stepwise setting of the gas stream,
- and/or for an appropriate complete blocking and/or opening of a line cross section of the bypass line (14) associated with the setting element (15).

4. The compressor system according to anyone of claims 1 to 3, **characterized in that** the setting element (15) is coupled to an actuator (19) which is designed for electrical, pneumatic or hydraulic actuation of the setting element.

5. The compressor system according to claim 4, **characterized in that** the actuator is driven by a motor.

6. The compressor system according to anyone of claims 1 to 5, **characterized in that** a condensate separator (20) is provided and arranged downstream of the one or more intercoolers (13) and upstream of a unification point (21), at which the gas stream guided via the bypass line (14) is unified with a gas stream guided via the one or more intercoolers (13) before entry into the last compressor (12).

7. The compressor system according to anyone of claims 1 to 6, **characterized in that** a control unit (22) is further provided which is operationally connected to the setting element (15) or an actuator (19) associated with the setting element (15), to act on the setting element (15) appropriately, in particular as a function of the present state data of the gas to be compressed or the compressed gas, such as the humidity of the aspirated air and/or the humidity of the compressed gas output from the drying sector (18).

8. The compressor system according to claim 7, **characterized in that** the control unit (22) comprises one or more signal inputs, in particular
- a signal input for an exit temperature at or downstream of the last compressor (12),
- a signal input for at least one signal characterizing the drying process, such as the entry temperature into the drying sector (18), the pressure dew point of the compressed gas output from the drying sector (18) and/or for a cooling medium temperature,
- a signal input for at least one signal characterizing the compression process of the last compressor (12),
- such as a gas entry temperature at said compressor,
- a gas exit pressure of said compressor,
- a gas entry pressure of said compressor,
- an operating temperature of said compressor or components connected downstream,
- a signal input for at least one signal characterizing the compression process of the next-to-last compressor,
- such as a gas exit temperature of the next-to-last compressor (11), or
- a gas exit pressure of the next-to-last compressor (11),
- a signal input for the rotational speed of one or more compressors (11, 12), and/or
- a signal input for the rotational speed of the adsorption chamber (44).

9. The compressor system according to claim 7 or 8, **characterized in that** a pressure dew point sensor (43) is provided, which is designed to acquire the pressure dew point of the compressed gas output at the drying sector (18) and is operationally connected to the control unit (22) such that the setting element (15) is settable via the control unit (22) as a function of the pressure dew point of the compressed gas output at the drying sector (18).

10. The compressor system according to anyone of claims 1 to 9, **characterized in that** the control unit (22) is operationally connected to a data memory (23) for operational data of the adsorption dryer (16).

11. The compressor system according to anyone of claims 7 to 10, **characterized in that** the control unit (22) is also operationally connected to the compressors (11, 12) and activates the compressors (11, 12), in particular sets a rotational speed thereof and/or acquires operational data thereof such as the rotational speed thereof.

12. A method for operating a compressor system for achieving a multistage compression, comprising multiple compressors (11, 12) connected in series, including a next-to-last compressor (11) in a flow direction and a last compressor (12) which defines the highest compressor stage within the multistage compression, and an adsorption dryer (16) connected downstream of the last compressor (12), the adsorption dryer (16) being designed as a rotation dryer and having a regeneration sector (17) and a drying sector (18), wherein the gas stream output from the last compressor (12) is guided according to a full stream principle through the regeneration sector (17) of the adsorption dryer (16),
**characterized in that**
via setting of a degree of opening of a bypass line (14) entirely or partially bypassing one or more intercoolers (13) provided between the next-to-last compressor (11) and the last compressor (12), the regeneration entry temperature T_{Ri} of the compressed gas in the regeneration sector (17) is set appropriately.

13. The method according to claim 12, **characterized in that** the regeneration entry temperature T_{Ri} in the regeneration sector (17) is set such that the compressed gas exiting the drying sector (18) maintains an established minimum limiting value for the degree of drying or the pressure dew point of the compressed gas extracted from the drying sector (18) does not exceed a limiting value GWT for the pressure dew point.

14. The method according to claim 13, **characterized in that** the limiting value GWT for the pressure dew point is set by a user to a constant value or is established or set as a function of the application.

15. The method according to anyone of claims 12 to 14, **characterized in that** the appropriate setting of the regeneration entry temperature T_{Ri} into the regeneration sector is performed during the operation of the compressor system as a function of the specific state data of the gas to be compressed or the compressed gas such as the humidity of the aspired gas and/or the humidity of the compressed gas output from the drying sector (18).

16. The method according to anyone of claims 12 to 15, **characterized in that** the appropriate setting of the regeneration entry temperature TRI is performed as a function of the acquired pressure dew point of the compressed gas at the outlet of the drying sector (18).

17. The method according to anyone of claims 12 to 16, **characterized in that** the degree of opening of the bypass line is limited while observing the maximum permissible operating temperatures of components which are provided downstream of the bypass line (14) and through which compressed gas flows, in particular of the last compressor (12).

18. The method according to anyone of claims 12 to 17, **characterized in that** the degree of opening of the bypass line is set via a setting element having an electrical, pneumatic, or hydraulic drive, preferably having a motor drive.

## Revendications

1. Groupe compresseur pour la compression de gaz dans une compression à plusieurs étages comprenant
- plusieurs compresseurs (11, 12) montés en série, comprenant au moins un avant-dernier compresseur (11), dans le sens d'écoulement, et un dernier compresseur (12) qui définit l'étage de compression la plus élevée au sein de la compression à plusieurs étages,
- un ou plusieurs refroidisseurs intermédiaires (13) entre l'avant-dernier compresseur (11) et le dernier compresseur (12),
- et un sécheur par adsorption (16) monté en aval du dernier compresseur (12), qui est constitué comme sécheur rotatif avec une chambre d'adsorption (44) rotative et comprend, à l'intérieur de la chambre d'adsorption, un secteur de régénération (17) ainsi qu'un secteur de séchage (18),
sachant que le secteur de régénération (17) est raccordé au niveau du dernier compresseur (12) d'une façon telle que le flux de gaz comprimé refoulé par le dernier compresseur (12) soit guidé selon le principe du flux total à travers le secteur de régénération (17) du sécheur par adsorption (16),
**caractérisé en ce que**
une conduite de dérivation (14) qui court-circuite le ou au moins un refroidisseur intermédiaire (13) est en outre disposée entre l' avant-dernier compresseur (11) et le dernier compresseur (12), et dans laquelle un organe de réglage (15) est prévu pour pouvoir régler selon les besoins le flux de gaz guidé via la conduite de dérivation (14) et ainsi la température d'entrée de régénération T_{Ri} du gaz comprimé dans le secteur de régénération (17).

2. Groupe compresseur selon la revendication 1, **caractérisé en ce que** l'avant-dernier compresseur (11) est le premier compresseur dans le sens d'écoulement et les compresseurs (11, 12) sont montés l'un derrière l'autre pour obtenir une compression à deux étages.

3. Groupe compresseur selon la revendication 1 ou 2, **caractérisé en ce que** l'organe de réglage (15) est constitué
- pour un réglage continu et/ou permanent du flux de gaz
- ou pour un réglage par étages du flux de gaz
- et/ou pour le barrage ou l'ouverture complets, selon les besoins, d'une section transversale de conduite associée à l'organe de réglage (15) de la conduite de dérivation (14).

4. Groupe compresseur selon l'une des revendications 1 à 3, **caractérisé en ce que** l'organe de réglage (15) est couplé à un actionneur (19) qui est constitué pour l'actionnement électrique, pneumatique ou hydraulique de l'organe de réglage.

5. Groupe compresseur selon la revendication 4, **caractérisé en ce que** l'actionneur est entraîné par moteur.

6. Groupe compresseur selon l'une des revendications 1 à 5, **caractérisé en ce qu'**un séparateur de condensat (20) est prévu, lequel est disposé en aval du ou des refroidisseurs intermédiaires (13) et en amont d'un point de jonction (21) où le flux de gaz guidé via la conduite de dérivation (14) rejoint le flux de gaz guidé via le ou les refroidisseurs intermédiaires (13) avant l'entrée dans le dernier compresseur (12).

7. Groupe compresseur selon l'une des revendications 1 à 6, **caractérisé en ce qu'**un dispositif de commande (22) est en outre prévu, lequel se trouve en liaison effective avec l'organe de réglage (15) ou un actionneur (19) associé à l'organe de réglage (15) pour agir sur l'organe de réglage (15) selon les besoins, en particulier en fonction des données d'état actuelles du gaz à comprimer ou du gaz comprimé, comme par exemple l'humidité de l'air aspiré et/ou l'humidité du gaz comprimé refoulé du secteur de séchage (18).

8. Groupe compresseur selon la revendication 7, **caractérisé en ce que** le dispositif de commande (22) comprend une ou plusieurs entrées de signal, en particulier
- une entrée de signal pour une température de sortie au niveau ou en aval du dernier compresseur (12),
- une entrée de signal pour au moins un signal caractérisant le processus de séchage, comme la température d'entrée dans le secteur de séchage (18), le point de rosée sous pression du gaz comprimé refoulé du secteur de séchage (18) et/ou pour une température de réfrigérant,
- une entrée de signal pour au moins un signal caractérisant le processus de compression du dernier compresseur (12),
- comme une température d'entrée de gaz au niveau de ce compresseur,
- une pression de sortie de gaz de ce compresseur,
- une pression d'entrée de gaz de ce compresseur,
- une température de fonctionnement de ce compresseur ou de composants montés en aval,
- une entrée de signal pour au moins un signal caractérisant le processus de compression de l'avant-dernier compresseur,
- comme une température de sortie de gaz de l'avant-dernier compresseur (11), ou
- une pression de sortie de gaz de l'avant-dernier compresseur (11),
- une entrée de signal pour la vitesse de rotation d'un ou de plusieurs compresseurs (11, 12), et/ou
- une entrée de signal pour la vitesse de rotation de la chambre d'adsorption (44).

9. Groupe compresseur selon la revendication 7 ou 8, **caractérisé en ce qu'**un capteur de point de rosée sous pression (43) est prévu, lequel est constitué pour saisir le point de rosée sous pression du gaz comprimé refoulé au niveau du secteur de séchage (18) et se trouve en liaison effective avec le dispositif de commande (22) de telle façon que l'organe de réglage (15) soit réglable via le dispositif de commande (22) en fonction du point de rosée sous pression du gaz comprimé refoulé au niveau du secteur de séchage (18).

10. Groupe compresseur selon l'une des revendications 1 à 9, **caractérisé en ce que** le dispositif de commande (22) se trouve en liaison effective avec une mémoire de données (23) pour données de fonctionnement du sécheur par adsorption (16).

11. Groupe compresseur selon l'une des revendications 7 à 10, **caractérisé en ce que** le dispositif de commande (22) se trouve aussi en liaison effective avec les compresseurs (11, 12) et pilote les compresseurs (11, 12), en particulier règle leur vitesse de rotation et/ou saisit leurs données de fonctionnement, en particulier leur vitesse de rotation.

12. Procédé pour l'exploitation d'un groupe compresseur pour l'obtention d'une compression à plusieurs étages comprenant plusieurs compresseurs (11, 12) montés en série, dont un avant-dernier compresseur (11), dans le sens d'écoulement, et un dernier compresseur (12) qui définit l'étage de compresseur le plus élevé au sein de la compression à plusieurs étages, ainsi qu'un sécheur par adsorption (16) monté en aval du dernier compresseur (12), qui est constitué comme sécheur rotatif et comprend un secteur de régénération (17) ainsi qu'un secteur de séchage (18), sachant que le flux de gaz refoulé par le dernier compresseur (12) est guidé selon le principe du flux total à travers le secteur de régénération (17) du sécheur par adsorption (16),
**caractérisé en ce que**
la température d'entrée de régénération T_{Ri} du gaz comprimé dans le secteur de régénération (17) est réglée selon les besoins via le réglage d'un degré d'ouverture d'une conduite de dérivation (14) qui court-circuite en tout ou en partie un ou plusieurs refroidisseurs intermédiaires (13) prévus entre l'avant-dernier compresseur (11) et le dernier compresseur (12).

13. Procédé selon la revendication 12, **caractérisé en ce que** la température d'entrée de régénération T_{Ri} dans le secteur de régénération (17) est réglée de telle façon que le gaz comprimé sortant du secteur de séchage (18) respecte une valeur seuil minimale définie pour le degré de séchage ou que le point de rosée sous pression du gaz comprimé prélevé du secteur de séchage (18) ne dépasse pas une valeur seuil définie GW_{T} pour le point de rosée sous pression.

14. Procédé selon la revendication 13, **caractérisé en ce que** la valeur seuil GW_{T} pour le point de rosée sous pression est réglée côté utilisateur à une valeur constante ou est définie ou réglée en fonction de l'application.

15. Procédé selon l'une des revendications 12 à 14, **caractérisé en ce que** le réglage selon les besoins de la température d'entrée de régénération T_{Ri} dans le secteur de régénération s'effectue en fonction des données d'état concrètes du gaz à comprimer ou du gaz comprimé, comme par exemple l'humidité du gaz aspiré et/ou l'humidité du gaz comprimé refoulé du secteur de séchage (18) pendant le fonctionnement du groupe compresseur.

16. Procédé selon l'une des revendications 12 à 15, **caractérisé en ce que** le réglage selon les besoins de la température d'entrée T_{Ri} s'effectue en fonction d'un point de rosée sous pression saisi du gaz comprimé à la sortie hors du secteur de séchage (18).

17. Procédé selon l'une des revendications 12 à 16, **caractérisé en ce que** le degré d'ouverture de la conduite de dérivation est limité compte tenu des températures de fonctionnement maximales admissibles des composants traversés par du gaz comprimé en aval de la conduite de dérivation (14), en particulier du dernier compresseur (12).

18. Procédé selon l'une des revendications 12 à 17, **caractérisé en ce que** le degré d'ouverture de la conduite de dérivation est réglé via un organe de réglage à entraînement électrique, pneumatique ou hydraulique, de préférence avec un entraînement par moteur.
